(19) Europäisches Patentamt
European Patent Office
Office européen des brevets

(11) **EP 4 387 376 A1**

(12) **EUROPEAN PATENT APPLICATION**
published in accordance with Art. 153(4) EPC

(43) Date of publication:
**19.06.2024 Bulletin 2024/25**

(21) Application number: **22866319.1**

(22) Date of filing: **11.08.2022**

(51) International Patent Classification (IPC):
***H04W 76/11*** *(2018.01)*

(52) Cooperative Patent Classification (CPC):
**H04W 76/11; H04W 76/14**

(86) International application number:
**PCT/CN2022/111737**

(87) International publication number:
**WO 2023/035845 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2021 CN 202111044588**

(71) Applicant: **Huawei Technologies Co., Ltd.
Shenzhen, Guangdong 518129 (CN)**

(72) Inventors:
• **GUO, Yuchen
Shenzhen, Guangdong 518129 (CN)**

• **HUANG, Guogang
Shenzhen, Guangdong 518129 (CN)**
• **LI, Yunbo
Shenzhen, Guangdong 518129 (CN)**
• **GAN, Ming
Shenzhen, Guangdong 518129 (CN)**
• **MONTEMURRO, Michael
Shenzhen, Guangdong 518129 (CN)**

(74) Representative: **Maiwald GmbH
Engineering
Elisenhof
Elisenstrasse 3
80335 München (DE)**

(54) **TRANSMISSION METHOD AND APPARATUS APPLIED TO TUNNELED DIRECT LINK SETUP**

(57) This application provides a transmission method and apparatus applied to a tunneled direct link setup, so that different STAs associated with a same multiple BSSID set communicate with each other based on the TDLS, to implement point-to-point communication, improve a transmission rate, and reduce a latency. In the method, a first STA sends a first radio frame. The first radio frame includes initiator address information, responder address information, and a first BSSID. The first BSSID is a BSSID in a multiple BSSID set including a BSSID of a BSS in which the first STA is located. The first STA receives a second radio frame. The second radio frame is a response frame of the first radio frame. This application is applied to a wireless local area network system that supports an IEEE 802.11ax next-generation Wi-Fi protocol, for example, 802.11be, or an 802.11 series protocol, for example, EHT.

FIG. 6

## Description

This application claims priority to Chinese Patent Application No. 202111044588.7, filed with the China National Intellectual Property Administration on September 7, 2021, and entitled "TRANSMISSION METHOD AND APPARATUS APPLIED TO TUNNELED DIRECT LINK SETUP", which is incorporated herein by reference in its entirety.

## TECHNICAL FIELD

This application relates to the field of wireless local area network (wireless local area network, WLAN) technologies, and in particular, to a transmission method and apparatus applied to a tunneled direct link setup (tunneled direct link setup, TDLS).

## BACKGROUND

With development of a WLAN technology, a feature of a multiple basic service set identifier set (multiple basic service set identifier set, multiple BSSID, also referred to as a multiple BSSID set) is introduced in a WLAN communication network. The multiple BSSID set includes a multiple basic service set identifier (basic service set identifier, BSSID), and different BSSIDs in the multiple BSSID identify different basic service sets (basic service set, BSS).

In a WLAN communication network, there may be a plurality of stations (station, STA) associated with a same access point (access point, AP), and the plurality of STAs may be denoted as STAs. If the STA is in a wireless communication reachable range, the STA may set up a direct link based on a TDLS, to perform point-to-point communication, increase a transmission rate, and reduce a latency.

Currently, one BSS includes one AP and several STAs, and the several STAs connected to the AP may communicate with each other based on the TDLS. In a TDLS-based communication process between the several STAs, a to-be-received or to-be-sent TDLS radio frame need to carry a BSSID corresponding to the BSS. In addition, for a STA, when a BSSID included in a TDLS radio frame received by the STA is different from a BSSID corresponding to a BSS to which the STA belongs, the STA may determine that the STA and a transmitter of the TDLS radio frame do not belong to a same BSS, and does not reply (or respond) to the TDLS radio frame. In other words, a TDLS direct link can only be set up between stations in a same BSS. If two STAs belong to different BSSs, the two STAs cannot communicate based on the TDLS.

A same communication parameter (for example, an operation set, a channel number, and an antenna port) is used for different APs in a same multiple BSSID set, so that STAs associated with the different APs in the same multiple BSSID set may also need to perform communication based on the TDLS.

However, because the different APs in the same multiple BSSID set respectively correspond to different BSSIDs, BSSs in which STAs of the different APs are located may have different BSSIDs. Consequently, STAs associated with the different APs in the same multiple BSSID set cannot communicate with each other based on the TDLS.

## SUMMARY

This application provides a transmission method and apparatus applied to a tunneled direct link setup, so that different STAs associated with a same multiple BSSID set communicate with each other based on the TDLS, to implement point-to-point communication, improve a transmission rate, and reduce a latency.

A first aspect of this application provides a transmission method applied to a TDLS, applied to WLAN communication. The method is performed by a first STA, or the method is performed by some components (for example, a processor, a chip, or a chip system) in the first STA. In the first aspect and the possible implementations of the first aspect, an example in which the method is performed by the first STA is used for description. In the method, a first STA sends a first radio frame. The first radio frame includes initiator address information, responder address information, and a first BSSID. The first BSSID is a BSSID in a multiple BSSID set including a BSSID of a BSS in which the first STA is located. The first STA receives a second radio frame. The second radio frame is a response frame of the first radio frame.

Based on the technical solution, in a transmission process applied to the TDLS, the first radio frame sent by the first STA includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the second STA receives the first radio frame, the second STA sends a response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

A second aspect of this application provides a transmission method applied to a TDLS, applied to WLAN communication. The method is performed by a second STA, or the method is performed by some components (for example, a processor, a chip, or a chip system) in the second STA. In the second aspect and the possible implementations of the second aspect, an example in which the method is performed by the second STA is used for description. In the method, a second STA receives a first radio frame. The first radio frame includes initiator address information, responder address information, and a first BSSID. The first BSSID is a BSSID in a multiple BSSID set including a BSSID of a BSS in which the second STA is located. The second STA sends a second radio frame. The second radio frame is a response frame of the first radio frame.

Based on the technical solution, in a transmission process applied to the TDLS, the first radio frame received by the second STA includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the second STA receives the first radio frame, the second STA sends a response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

A third aspect of this application provides a transmission apparatus applied to a TDLS, applied to WLAN communication. The apparatus is a first STA, or the apparatus is some components (for example, a processor, a chip, or a chip system) in the first STA. A sending unit in the apparatus is configured to send a first radio frame. The first radio frame includes initiator address information, responder address information, and a first BSSID. The first BSSID is a BSSID in a multiple BSSID set including a BSSID of a BSS in which the first STA is located. A receiving unit in the apparatus is configured to receive a second radio frame. The second radio frame is a response frame of the first radio frame.

Based on the technical solution, in a transmission process applied to the TDLS, the first radio frame sent by the sending unit includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the second STA receives the first radio frame, the second STA sends a response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

A fourth aspect of this application provides a transmission apparatus applied to a TDLS, applied to WLAN communication. The apparatus is a second STA, or the apparatus is some components (for example, a processor, a chip, or a chip system) in the second STA. A receiving unit in the apparatus receives a first radio frame. The first radio frame includes initiator address information, responder address information, and a first BSSID. The first BSSID is a BSSID in a multiple BSSID set including a BSSID of a BSS in which the second STA is located. A sending unit in the apparatus is configured to send a second radio frame. The second radio frame is a response frame of the first radio frame.

Based on the technical solution, in a transmission process applied to the TDLS, the first radio frame received by the receiving unit includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the receiving unit receives the first radio frame, the sending unit sends the response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

In a possible implementation of any one of the first aspect to the fourth aspect, an initiator is the first STA, and a responder is the second STA; or the initiator is a first multi-link device MLD in which the first STA is located, and the responder is the second STA; or the initiator is the first STA, and the responder is a second MLD in which the second STA is located; or the initiator is a first MLD in which the first STA is located, and the responder is a second MLD in which the second STA is located.

Based on the technical solution, in the transmission process applied to the TDLS, an initiator indicated by the initiator address information carried in the first radio frame may be specifically the first STA or the first MLD in which the first STA is located, and a responder indicated by the responder address information carried in the first radio frame may be specifically the second STA or the second MLD in which the second STA is located, to implement a TDLS-based communication process between a plurality of single-link devices, between a plurality of multi-link devices, or between a multi-link device and a single-link device.

In a possible implementation of any one of the first aspect to the fourth aspect,
the BSSID of the BSS in which the first STA is located is different from the BSSID of the BSS in which the second STA is located.

In a possible implementation of any one of the first aspect to the fourth aspect, the BSSID of the BSS in which the first STA is located is the same as the BSSID of the BSS in which the second STA is located.

Based on the technical solution, the BSSID of the BSS in which the first STA is located is the same as the BSSID of the BSS in which the second STA is located. In other words, the TDLS initiator and the TDLS responder belong to a BSS corresponding to a same BSSID in a same multiple BSSID set. In this way, a plurality of STAs in a same BSS implement TDLS transmission by using a radio frame to carry a BSSID in the multiple BSSID set, so that a plurality of STAs associated with a same BSS in a same multiple BSSID set communicate with each other based on the TDLS.

In a possible implementation of any one of the first aspect to the fourth aspect,

the first BSSID is a transmitted BSSID in the multiple BSSID set; or
the first BSSID is a BSSID corresponding to the BSS in which the first STA is located; or
the first BSSID is a BSSID corresponding to the BSS in which the second STA is located.

Optionally, the first BSSID is any BSSID in the multiple BSSID set.

In a possible implementation of any one of the first aspect to the fourth aspect, the second radio frame includes the initiator address information, the responder address information, and a second BSSID, and the multiple BSSID set includes the second BSSID.

Based on the technical solution, when the method is applied to a TDLS discovery process or a TDLS setup process, as the response frame of the first radio frame, the second radio frame may also carry a second information element carrying the initiator address information, the responder address information, and the second BSSID. For example, the second information element is included in a TDLS discovery response frame, or the second information element is included in a TDLS setup response frame.

Optionally, the second BSSID is a BSSID in the multiple BSSID set including the BSSID of the BSS in which the first STA is located. In this case, when BSSs in which different STAs are located belong to a same multiple BSSID set, different STAs implement TDLS transmission (including a TDLS discovery and/or a TDLS setup) by using a response frame of a radio frame to carry a BSSID in the multiple BSSID set, so that different STAs associated with a same multiple BSSID set communicate with each other based on the TDLS.

In a possible implementation of any one of the first aspect to the fourth aspect, the second BSSID is a transmitted basic service set identifier transmitted BSSID in the multiple BSSID set; or

the second BSSID is a BSSID corresponding to the BSS in which the first STA is located; or
the second BSSID is a BSSID corresponding to the BSS in which the second STA is located.

Optionally, the second BSSID is any BSSID in the multiple BSSID set.

In a possible implementation of any one of the first aspect to the fourth aspect, the first BSSID is the same as the second BSSID.

Based on the technical solution, the first BSSID carried in the first radio frame and the second BSSID carried in the second radio frame may be a same BSSID. To be specific, after receiving the first radio frame that carries the first BSSID, a receiver of the first radio frame uses the response frame of the first radio frame to carry the second BSSID the same as the first BSSID. In this way, implementation complexity of the second radio frame is reduced, and a transmitter of the first radio frame determines, based on a same BSSID, that the second radio frame is the response frame of the first radio frame.

In a possible implementation of any one of the first aspect to the fourth aspect, the first BSSID is different from the second BSSID.

Based on the technical solution, the first BSSID carried in the first radio frame and the second BSSID carried in the second radio frame may be different BSSIDs. To be specific, after receiving the first radio frame that carries the first BSSID, the receiver of the first radio frame uses the response frame of the first radio frame to carry the second BSSID different from the first BSSID. Therefore, the receiver of the first radio frame does not need to be limited by a setting of the BSSID carried in the first radio frame, to improve implementation flexibility of the second radio frame.

In a possible implementation of any one of the first aspect to the fourth aspect, the BSSID of the BSS in which the first STA is located is different from the BSSID of the BSS in which the second STA is located.

Based on the technical solution, the BSSID of the BSS in which the first STA is located is different from the BSSID of the BSS in which the second STA is located. In other words, the TDLS initiator and the TDLS responder respectively belong to BSSs corresponding to different BSSIDs in a same multiple BSSID set. In this way, STAs in different BSSs implement TDLS transmission by using a radio frame to carry a BSSID in the multiple BSSID set, so that a plurality of STAs associated with different BSSs in a same multiple BSSID set communicate with each other based on the TDLS.

In a possible implementation of any one of the first aspect to the fourth aspect,

the first radio frame is a TDLS discovery request frame, and the second radio frame is a TDLS discovery response frame; or
the first radio frame is a TDLS setup request frame, and the second radio frame is a TDLS setup response frame; or
the first radio frame is a TDLS setup confirm frame, and the second radio frame is a first acknowledgment frame; or
the first radio frame is a TDLS data frame, and the second radio frame is a second acknowledgment frame.

Based on the technical solution, the method may be used in a plurality of communication processes applied to the TDLS. When the first radio frame is a TDLS discovery request frame and the second radio frame is a TDLS discovery response frame, the method is applied to a TDLS discovery process; or when the first radio frame is a TDLS setup request frame and the second radio frame is a TDLS setup response frame, the method is applied to a TDLS setup process. Alternatively, when the first radio frame is a TDLS setup confirm (TDLS setup confirm) frame and the second radio frame is a first acknowledgment frame, the process may be referred to as a TDLS authentication process; and when the first radio frame is a TDLS data frame and the second radio frame is a second acknowledgment frame, the process may be referred to as a TDLS data frame transmission process.

Optionally, the first acknowledgment frame may be an acknowledgment (acknowledge, ACK) frame, or the second acknowledgment frame may be a block acknowledgment (block acknowledge, Block ACK, BA for short) frame or an ACK frame.

In a possible implementation of any one of the first aspect to the fourth aspect, the first radio frame includes a link identification information (Link Identifier element, LIE) element, the link identification information element includes the initiator address information, the responder address information, and the first BSSID, and the initiator address information is MAC address information of the first STA.

Optionally, the first STA is a single-link device.

Based on the technical solution, the receiver (for example, the second STA) of the first radio frame may receive the MAC address information of the first STA based on the link identification information element. Therefore, the receiver of the first radio frame may receive the MAC address information of the first STA from a location at which the link identification information element in the first radio frame is located, and subsequently, the receiver of the first radio frame communicates with the first STA based on the MAC address information of the first STA.

In a possible implementation of any one of the first aspect to the fourth aspect, the first radio frame includes a link identification information element and a multi-link element; the link identification information element includes the initiator address information, the responder address information, and the first BSSID, and the initiator address information is MAC address information of the first MLD in which the first STA is located; and the multi-link element includes MAC address information of the first STA.

Optionally, the first STA is a STA in the multi-link device.

Based on the technical solution, the first radio frame sent by the first STA may further carry a multi-link element indicating link information of the first MLD in which the first STA is located. In a transmission process applied to the TDLS, the initiator address information may be the MAC address information of the first MLD in which the first STA is located, to indicate that the TDLS initiator is the first MLD, so that subsequently, the second STA (or the second MLD in which the second STA is located) can implement a TDLS-based communication process with the first MLD based on the first radio frame.

In a possible implementation of any one of the first aspect to the fourth aspect, the multi-link element includes a common information field, and the MAC address information of the first STA is located in the common information field.

Based on the technical solution, the MAC address information of the first STA is located in the common information field of the first multi-link element included in the first radio frame, so that the receiver of the first radio frame can determine the MAC address information of the first STA based on the common information field.

In a possible implementation of any one of the first aspect to the fourth aspect, the first radio frame includes the multi-link element, the multi-link element includes a first field, and the first field indicates whether the multi-link element includes the MAC address information of the first STA.

Optionally, when a value of the first field is a first value, the first field indicates that the multi-link element in the first radio frame includes the MAC address information of the first STA.

Optionally, when the value of the first field is a second value, the first field indicates that the multi-link element in the first radio frame does not include the MAC address information of the first STA.

Optionally, the first value is different from the second value.

In a possible implementation of any one of the first aspect to the fourth aspect, the first field is located in a presence bitmap field in the multi-link element.

Based on the technical solution, the first field is located in the presence bitmap field in the multi-link element included in the first radio frame, so that the receiver of the first radio frame can determine the first field based on the presence bitmap field.

In a possible implementation of any one of the first aspect to the fourth aspect, the second radio frame includes a link identification information element, and the link identification information element includes the initiator address information, the responder address information, and the second BSSID.

Optionally, the responder address information is MAC address information of MAC of the second STA.

Optionally, the second STA is a single-link device.

Based on the technical solution, a receiver (for example, the first STA) of the second radio frame may receive the MAC address information of the second STA based on the link identification information element. Therefore, the receiver of the second radio frame may receive the MAC address information of the second STA from a location at which the link identification information element in the second radio frame is located, and subsequently, the receiver of the second radio frame communicates with the second STA based on the MAC address information of the second STA.

In a possible implementation of any one of the first aspect to the fourth aspect, the second radio frame includes a link identification information element and a multi-link element; the link identification information element includes the initiator address information, the responder address information, and the second BSSID, and the responder address information is MAC address information of the second MLD in which the second STA is located; and the multi-link element includes MAC address information of the second STA.

Optionally, the second STA is a STA in the multi-link device.

Based on the technical solution, the second radio frame sent by the second STA may further carry a multi-link element indicating link information of the second MLD in which the second STA is located. In the transmission process applied to the TDLS, the responder address information may be the MAC address information of the second MLD in which the second STA is located, to indicate that the TDLS responder is the second MLD, so that subsequently, the first STA (or the first MLD in which the first STA is located) can implement a TDLS-based communication process with the second MLD based on the second radio frame.

In a possible implementation of any one of the first aspect to the fourth aspect, the multi-link element includes a common information field, and the MAC address information of the second STA is located in the common information field.

Based on the technical solution, the MAC address information of the second STA is located in the common information field of the second multi-link element included in the second radio frame, so that the receiver of the second radio frame can determine the MAC address information of the second STA based on the common information field.

In a possible implementation of any one of the first aspect to the fourth aspect, the second radio frame includes the multi-link element, the multi-link element includes a second field, and the second field indicates whether the multi-link element includes the MAC address information of the second STA.

Optionally, when a value of the first field is a first value, the first field indicates that the multi-link element in the second radio frame includes the MAC address information of the second STA.

Optionally, when the value of the first field is a second value, the first field indicates that the multi-link element in the second radio frame does not include the MAC address information of the second STA.

Optionally, the first value is different from the second value.

In a possible implementation of any one of the first aspect to the fourth aspect, the second field is located in a presence bitmap field in the multi-link element.

Based on the technical solution, the first field is located in the presence bitmap field in the multi-link element included in the first radio frame, so that the receiver of the first radio frame can determine the first field based on the presence bitmap field.

In a possible implementation of any one of the first aspect to the fourth aspect, the first radio frame further includes a tunneled direct link setup peer key handshake message (tunneled direct link setup peer key handshake message, TPK Handshake Message), the TPK handshake message carries a parameter required for generating a tunneled direct link setup peer key (tunneled direct link setup peer key, TPK), and the parameter includes the first BSSID.

Optionally, the second radio frame further includes a TPK handshake message, the TPK handshake message carries a parameter required for generating a TPK, and the parameter includes the second BSSID.

Based on the technical solution, the first radio frame further includes a parameter required for carrying the TPK, and the parameter includes a first BSSID. The TPK is a key used for TDLS communication, so that the key is generated based on the first BSSID (or the second BSSID). This provides a key generation manner used when different STAs associated with a same multiple BSSID set communicate with each other based on the TDLS.

In a possible implementation of any one of the first aspect to the fourth aspect, the first STA and the second STA are respectively affiliated with different multi-link devices (multi-link device, MLD).

Based on the technical solution, the first STA and the second STA are respectively affiliated with different MLDs. Therefore, in the transmission method, a plurality of STAs associated with different MLDs in a same multiple BSSID set can communicate with each other based on the TDLS.

Optionally, the first STA and the second STA are affiliated with a same MLD.

Based on the technical solution, the first STA and the second STA are affiliated with a same MLD, so that a plurality of STAs associated with a same MLD in a same multiple BSSID set communicate with each other based on the TDLS.

In a possible implementation of the first aspect, before the sending a first radio frame, the method further includes: The first STA sends a third radio frame. The third radio frame includes internet protocol (internet protocol, IP) address information of the responder, and a query frame is used to request MAC address information of the responder. The first STA receives a response frame of the third radio frame. The response frame of the third radio frame includes the MAC address information of the responder.

Based on the technical solution, before the first STA sends the first radio frame, the first STA may further request a MAC address of the responder based on the third radio frame that carries an IP address of the responder, to determine, based on a response frame of the third radio frame, the MAC address that is of the responder and that is carried in the first radio frame.

It should be noted that, the first STA may determine the IP address of the responder based on an input operation of a user, or the first STA may determine the IP address of the responder based on configuration information/instruction of an AP, or the first STA may determine the IP address of the responder in a two-dimensional code scanning manner, or the first STA may determine the IP address of the responder in another manner. This is not limited herein.

In a possible implementation of the first aspect, the first BSSID is a BSSID corresponding to a BSS in which the responder is located, and before the sending a first radio frame, the method further includes: The first STA sends a fourth radio frame. The fourth radio frame includes the responder address information, and the query frame is used to request the BSSID corresponding to the BSS in which the responder is located. The first STA receives a response frame of the fourth radio frame. The response frame of the fourth radio frame includes the BSSID corresponding to the BSS in which the responder is located.

Based on the technical solution, the first BSSID carried in the first radio frame may be the BSSID corresponding to the BSS in which the responder is located. Therefore, before the first STA sends the first radio frame, the first STA may further request, based on the fourth radio frame that carries the responder address information, the BSSID corresponding to the BSS in which the responder is located, to determine, based on the response frame of the fourth radio frame, the BSSID that corresponds to the BSS in which the responder is located and that is carried in the first radio frame.

In a possible implementation of the third aspect, the responder address information includes MAC address information of the responder. The sending unit is further configured to send a third radio frame. The third radio frame includes IP address information of the responder, and the query frame is used to request the MAC address information of the responder. The receiving unit is further configured to receive a response frame of the third radio frame. The response frame of the third radio frame includes the MAC address information of the responder.

Based on the technical solution, before the sending unit sends the first radio frame, the apparatus may further request a MAC address of the responder based on the third radio frame that carries an IP address of the responder, to determine, based on the response frame of the third radio frame, the MAC address that is of the responder and that is carried in the first radio frame.

In a possible implementation of the third aspect, the first BSSID is a BSSID corresponding to a BSS in which the responder is located. The sending unit is further configured to send a fourth radio frame. The fourth radio frame includes the responder address information, and the query frame is used to request the BSSID corresponding to the BSS in which the responder is located. The receiving unit is further configured to receive a response frame of the fourth radio frame. The response frame of the fourth radio frame includes the BSSID corresponding to the BSS in which the responder is located.

Based on the technical solution, the first BSSID carried in the first radio frame may be the BSSID corresponding to the BSS in which the responder is located. Therefore, before the sending unit sends the first radio frame, the apparatus may further request, based on the fourth radio frame that carries the responder address information, the BSSID corresponding to the BSS in which the responder is located, to determine, based on the response frame of the fourth radio frame, the BSSID that corresponds to the BSS in which the responder is located and that is carried in the first radio frame.

In a possible implementation of any one of the first aspect to the fourth aspect, the first radio frame includes a TDLS discovery request frame, a TDLS setup request frame, or a TDLS setup confirm frame; and that the first STA sends the first radio frame includes: The first STA sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

Based on the technical solution, the method may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The first STA may send the first radio frame to the first AP associated with the first STA. The first radio frame further includes an A1 field indicating a receiver address (receiver address, RA) of the first radio frame, an A2 field indicating a transmitter address (transmitter address, TA) of the first radio frame, and an A3 field indicating a destination address (destination address, DA) of the first radio frame.

In a possible implementation of any one of the first aspect to the fourth aspect, the first radio frame is a TDLS data frame; and that the first STA sends the first radio frame includes: The first STA sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

Based on the technical solution, the method may be applied to a plurality of TDLS-based transmission processes, for example, a TDLS data transmission process. In other words, the first radio frame is a TDLS data frame. The first STA may specifically send the first radio frame to the second STA. The first radio frame further includes an A1 field indicating a RA of the first radio frame, an A2 field indicating a TA of the first radio frame, and an A3 field indicating a DA of the first radio frame.

In a possible implementation of any one of the first aspect to the fourth aspect, the second radio frame is a TDLS setup response frame; and that the first STA receives the second radio frame includes: The first STA receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

Based on the technical solution, the method may be applied to a plurality of TDLS-based transmission processes, for example, a TDLS setup process. The second radio frame is specifically a TDLS setup response frame. The first STA may receive the second radio frame sent by the first AP associated with the first STA. The second radio frame further includes an A1 field indicating a RA of the second radio frame, an A2 field indicating a TA of the second radio frame, and an A3 field indicating a DA of the second radio frame.

In a possible implementation of any one of the first aspect to the fourth aspect, the second radio frame includes a TDLS discovery response frame, a response frame of the TDLS setup confirm frame, or a response frame of the TDLS data frame; and that the first STA receives the second radio frame includes: The first STA receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Based on the technical solution, the method may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The first STA may receive the second radio frame sent by the second STA. The second radio frame further includes an A1 field indicating a RA of the second radio frame, an A2 field indicating a TA of the second radio frame, and an A3 field indicating a DA of the second radio frame.

In a possible implementation of any one of the first aspect to the fourth aspect, the first radio frame includes a TDLS discovery request frame, a TDLS setup request frame, or a TDLS setup confirm frame; and that the second STA receives the first radio frame includes: The second STA receives the first radio frame from a second AP associated with the second STA. The first radio frame further includes an A1 field, an A2 field, and an A3 field. A value of the A1 field is the address information of the second STA, a value of the A2 field is address information of the second AP, and a value of the A3 field is the initiator address information.

Based on the technical solution, the method may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The second STA may receive the first radio frame sent by the second AP associated with the second STA. The first radio frame further includes an A1 field indicating a RA of the first radio frame, an A2 field indicating a TA of the first radio frame, and an A3 field indicating a DA of the first radio frame.

In a possible implementation of any one of the first aspect to the fourth aspect, the first radio frame is a TDLS data frame; and that the second STA receives the first radio frame includes: The second STA receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

Based on the technical solution, the method may be applied to a plurality of TDLS-based transmission processes, for example, a TDLS data transmission process. In other words, the first radio frame is a TDLS data frame. The second STA may specifically receive the first radio frame sent by the first STA. The first radio frame further includes an A1 field indicating a RA of the first radio frame, an A2 field indicating a TA of the first radio frame, and an A3 field indicating a DA of the first radio frame.

In a possible implementation of any one of the first aspect to the fourth aspect, the second radio frame is a TDLS setup response frame, and that the second STA sends the second radio frame includes: The first STA sends the second radio frame to a second AP associated with the second STA. The second radio frame includes an A1 field, an A2 field, and an A3 field. A value of the A1 field is address information of the second AP, a value of the A2 field is the address information of the second STA, and a value of the A3 field is the initiator address information.

Based on the technical solution, the method may be applied to a plurality of TDLS-based transmission processes, for example, a TDLS setup process. The second radio frame is specifically a TDLS setup response frame. The second STA may specifically send the second radio frame to the second AP associated with the second STA. The second radio frame further includes an A1 field indicating a RA of the second radio frame, an A2 field indicating a TA of the second radio frame, and an A3 field indicating a DA of the second radio frame.

In a possible implementation of any one of the first aspect to the fourth aspect, the second radio frame includes a TDLS discovery response frame, a response frame of the TDLS setup confirm frame, or a response frame of the TDLS data frame; and that the second STA sends the second radio frame includes: The second STA sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Based on the technical solution, the method may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The second STA may specifically send the second radio frame to the second STA associated with the second STA. The second radio frame further includes an A1 field indicating a RA of the second radio frame, an A2 field indicating a TA of the second radio frame, and an A3 field indicating a DA of the second radio frame.

A fifth aspect of embodiments of this application provides a communication method, applied to WLAN communication. The method is performed by an AP, or the method is performed by some components (for example, a processor, a chip, or a chip system) in the AP. In the fifth aspect and the possible implementations of the fifth aspect, an example in which the method is performed by the AP is used for description. In the method, the AP receives a third radio frame from a first STA. The third radio frame includes IP address information of a responder, a query frame is used to request MAC address information of the responder, and a BSS in which the first STA is located is different from a BSS in which the responder is located. The AP sends a response frame of the third radio frame. A response frame of the fourth radio frame includes the MAC address information of the responder.

Based on the technical solution, the third radio frame that is received by the AP and that carries an IP address of the responder is used to request a MAC address of the responder, so that the AP sends the response frame of the third radio frame based on the third radio frame, and the first STA determines the MAC address of the responder based on the response frame of the third radio frame. Then, the first STA may implement TDLS transmission with the responder based on the first radio frame that carries the MAC address of the responder, the BSS in which the first STA is located and the BSS in which the responder is located belong to a same multiple BSSID set, and the BSS in which the first STA is located is different from the BSS in which the responder is located. Therefore, STAs in different BSSs implement TDLS transmission by using a radio frame to carry a MAC address indicated by the AP, so that different STAs associated with a same multiple BSSID set communicate with each other based on a TDLS, to implement point-to-point communication, improve a transmission rate, and reduce a latency.

A sixth aspect of embodiments of this application provides a communication apparatus, applied to WLAN communication. The apparatus is an AP, or the apparatus is some components (for example, a processor, a chip, or a chip system) in the AP. A receiving unit in the apparatus is configured to receive a third radio frame from a first STA. The third radio frame includes IP address information of a responder, a query frame is used to request MAC address information of the responder, and a BSS in which the first STA is located is different from a BSS in which the responder is located. A sending unit in the apparatus is configured to send a response frame of the third radio frame. A response frame of the fourth radio frame includes the MAC address information of the responder.

Based on the technical solution, the third radio frame that is received by the receiving unit and that carries an IP address of the responder is used to request a MAC address of the responder, so that the sending unit sends the response frame of the third radio frame based on the third radio frame, and the first STA determines the MAC address of the responder based on the response frame of the third radio frame. Then, the first STA may implement TDLS transmission with the responder based on the first radio frame that carries the MAC address of the responder, the BSS in which the first STA is located and the BSS in which the responder is located belong to a same multiple BSSID set, and the BSS in which the first STA is located is different from the BSS in which the responder is located. Therefore, STAs in different BSSs implement TDLS transmission by using a radio frame to carry a MAC address indicated by the AP, so that different STAs associated with a same multiple BSSID set communicate with each other based on a TDLS, to implement point-to-point communication, improve a transmission rate, and reduce a latency.

In a possible implementation of the fifth aspect or the sixth aspect,
the responder is a second STA or a second MLD in which the second STA is located.

In a possible implementation of the fifth aspect or the sixth aspect,

the first STA and the responder are located in a same local area network; or
the first STA and the responder are located in a same subnet; or
a mapping relationship between identification information of the responder and responder address information is preconfigured in the AP.

Based on the technical solution, the AP is an AP associated with the first STA, and the BSS in which the first STA is located and the BSS in which the responder is located belong to a same multiple BSSID set. The AP may configure, in a same local area network (or a same subnet) in a pre-configuration manner, the BSS in which the first STA is located and the BSS in which the responder is located, to determine the MAC address of the responder. Alternatively, the AP may interact with an AP associated with the responder, to determine the MAC address of the responder.

In a possible implementation of the fifth aspect, after the AP sends the response frame of the third radio frame, the method further includes: The AP receives a fourth radio frame from the first STA. The fourth radio frame includes the responder address information, and the query frame is used to request a BSSID corresponding to the BSS in which the responder is located. The AP sends a response frame of the fourth radio frame. The response frame of the fourth radio frame includes the BSSID corresponding to the BSS in which the responder is located.

Based on the technical solution, the fourth radio frame that is received by the AP and that carries the responder address information is used to request the BSSID corresponding to the BSS in which the responder is located, so that the AP sends the response frame of the fourth radio frame based on the fourth radio frame, and the first STA determines, based on the response frame of the fourth radio frame, the BSSID corresponding to the BSS in which the responder is located. Then, the first STA may implement TDLS transmission with the responder based on the first radio frame that carries the BSSID corresponding to the BSS in which the responder is located. Therefore, STAs in different BSSs implement TDLS transmission by using a radio frame to carry a BSSID that corresponds to a BSS in which another STA is located and that is indicated by the AP, so that different STAs associated with a same multiple BSSID set communicate with each other based on a TDLS, to implement point-to-point communication, improve a transmission rate, and reduce a latency.

In a possible implementation of the sixth aspect, the receiving unit is further configured to receive a fourth radio frame from the first STA. The fourth radio frame includes responder address information, and the query frame is used to request the BSSID corresponding to the BSS in which the responder is located. The sending unit is further configured to send a response frame of the fourth radio frame. The response frame of the fourth radio frame includes the BSSID corresponding to the BSS in which the responder is located.

Based on the technical solution, the fourth radio frame that is received by the receiving unit and that carries the responder address information is used to request the BSSID corresponding to the BSS in which the responder is located, so that the apparatus sends the response frame of the fourth radio frame based on the fourth radio frame, and the first STA determines, based on the response frame of the fourth radio frame, the BSSID corresponding to the BSS in which the responder is located. Then, the first STA may implement TDLS transmission with the responder based on the first radio frame that carries the BSSID corresponding to the BSS in which the responder is located. Therefore, STAs in different BSSs implement TDLS transmission by using a radio frame to carry a BSSID that corresponds to a BSS in which another STA is located and that is indicated by the AP, so that different STAs associated with a same multiple BSSID set communicate with each other based on a TDLS, to implement point-to-point communication, improve a transmission rate, and reduce a latency.

A seventh aspect of embodiments of this application provides a communication apparatus, including at least one processor. The at least one processor is coupled to a memory, and the memory is configured to store a program or instructions. The at least one processor is configured to execute the program or instructions, so that the apparatus implements the method described in any one of the first aspect or the possible implementations of the first aspect, or the apparatus implements the method described in any one of the second aspect or the possible implementations of the second aspect, or the apparatus implements the method described in any one of the fifth aspect or the possible implementations of the fifth aspect.

An eighth aspect of embodiments of this application provides a computer-readable storage medium storing one or more computer-executable instructions. When the computer-executable instructions are executed by a processor, the processor performs the method described in any one of the first aspect or the possible implementations of the first aspect, or the processor performs the method described in any one of the second aspect or the possible implementations of the second aspect, or the processor performs the method described in any one of the fifth aspect or the possible implementations of the fifth aspect.

A ninth aspect of embodiments of this application provides a computer program product (or referred to as a computer program) storing one or more computers. When the computer program product is executed by a processor, the processor performs the method in any one of the first aspect or the possible implementations of the first aspect, or the processor performs the method described in any one of the second aspect or the possible implementations of the second aspect, or the processor performs the method described in any one of the fifth aspect or the possible implementations of the fifth aspect.

A tenth aspect of embodiments of this application provides a chip system. The chip system includes at least one processor, configured to support a communication apparatus to implement the function in any one of the first aspect or the possible implementations of the first aspect; or configured to support the communication apparatus to implement the function in any one of the second aspect or the possible implementations of the second aspect; or configured to support the communication apparatus to implement the function in any one of the fifth aspect or the possible implementations of the fifth aspect.

In a possible design, the chip system may further include a memory, configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

An eleventh aspect of embodiments of this application provides a communication system. The communication system includes the communication apparatus in the third aspect and the communication apparatus in the fourth aspect, and/or the communication system includes the communication apparatus in the sixth aspect, and/or the communication system includes the communication apparatus in the seventh aspect.

For technical effects brought by any design in the seventh aspect to the eleventh aspect, refer to the technical effects brought by different implementations in the first aspect to the sixth aspect. Details are not described herein again.

It can be learned from the technical solution that, in the transmission process applied to the TDLS, the first radio frame sent by the first STA includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the second STA receives the first radio frame, the second STA sends a response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

**BRIEF DESCRIPTION OF DRAWINGS**

FIG. 1 is a schematic diagram of a communication system to which this application is applied;
FIG. 2a is a schematic diagram of a radio frame according to an embodiment of this application;
FIG. 2b is another schematic diagram of a radio frame according to an embodiment of this application;
FIG. 3 is another schematic diagram of a radio frame according to an embodiment of this application;
FIG. 4 is another schematic diagram of a radio frame according to an embodiment of this application;
FIG. 5a is another schematic diagram of a communication system to which this application is applied;
FIG. 5b is another schematic diagram of a communication system to which this application is applied;
FIG. 5c is another schematic diagram of a radio frame according to an embodiment of this application;
FIG. 5d is another schematic diagram of a radio frame according to an embodiment of this application;
FIG. 6 is a schematic diagram of a transmission method applied to a TDLS according to an embodiment of this application;
FIG. 7a is another schematic diagram of a transmission method applied to a TDLS according to an embodiment of this application;

FIG. 7b is another schematic diagram of a transmission method applied to a TDLS according to an embodiment of this application;

FIG. 8 is a schematic diagram of a communication apparatus according to an embodiment of this application; and

FIG. 9 is another schematic diagram of a communication apparatus according to an embodiment of this application.

DESCRIPTION OF EMBODIMENTS

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following descriptions are implementations of this application, but are not intended to limit the protection scope of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, an apparatus provided in embodiments of this application may also correspondingly implement these features or functions. Details are not described herein.

In the descriptions of this application, "a plurality of" means two or more than two unless otherwise specified. "At least one of the following items (pieces)" or an expression similar thereto means any combination of these items, including any combination of singular items (pieces) or plural items (pieces). For example, at least one of a, b, or c may represent a, b, c, a and b, a and c, b and c, or a, b, and c, where a, b, and c may be singular or plural.

In addition, to clearly describe technical solutions in embodiments of this application, words such as "first" and "second" are used in embodiments of this application to distinguish between same items or similar items that have basically the same functions or purposes. A person skilled in the art may understand that the words such as "first" and "second" do not limit a quantity and an execution sequence, and that the words such as "first" and "second" do not indicate a definite difference. In addition, in embodiments of this application, the word such as "example" or "for example" represents giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" are intended to present a related concept in a specific manner for ease of understanding.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and constitutes no limitation on the technical solutions provided in embodiments of this application.

The technical solutions provided in this application are applicable to a WLAN scenario, for example, are applicable to standards of an IEEE 802.11 system, for example, an 802.11a/b/g standard, an 802.11n standard, an 802.11ac standard, an 802.11ax standard, or a next generation of 802.11ax, for example, 802.11be, or a further next generation standard.

Although embodiments of this application are mainly described by using an example in which a WLAN network, especially a network to which the standards of an IEEE 802.11 system are applied is deployed, a person skilled in the art easily understands that aspects of this application may be extended to other networks using various standards or protocols, for example, Bluetooth (Bluetooth), a high-performance wireless LAN (high performance radio LAN, HIPERLAN) (which is a wireless standard similar to the IEEE 802.11 standard, and mainly used in Europe), a wide area network (WAN), a personal area network (personal area network, PAN), or other networks that are known currently or developed in future. Therefore, regardless of a used coverage area and wireless access protocol, various aspects provided in this application are applicable to any proper wireless network.

Alternatively, embodiments of this application may be applied to a wireless local area network system, for example, an internet of things (internet of things, IoT) or a vehicle-to-everything (Vehicle to X, V2X) network. Certainly, embodiments of this application may be further applied to other possible communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, and a future sixth generation (6th generation, 6G) communication system.

The communication system to which this application is applicable is merely an example for description, and the communication system to which this application is applicable is not limited thereto. This is collectively described herein. Details are not described below again.

A transmission method and apparatus applied to a tunneled direct link setup provided in embodiments of this application may be applied to a wireless communication system. The wireless communication system may be a wireless local area network (wireless local area network, WLAN) or a cellular network. The method may be implemented by a communication device in the wireless communication system or a chip or a processor in the communication device. The communication device may be a wireless communication device that supports parallel transmission on a plurality of links, for example, may be referred to as a multi-link device (multi-link device, MLD) or a multi-band device (multi-band device). Compared with a device that supports only single-link transmission, the multi-link device has higher transmission efficiency and a higher throughput.

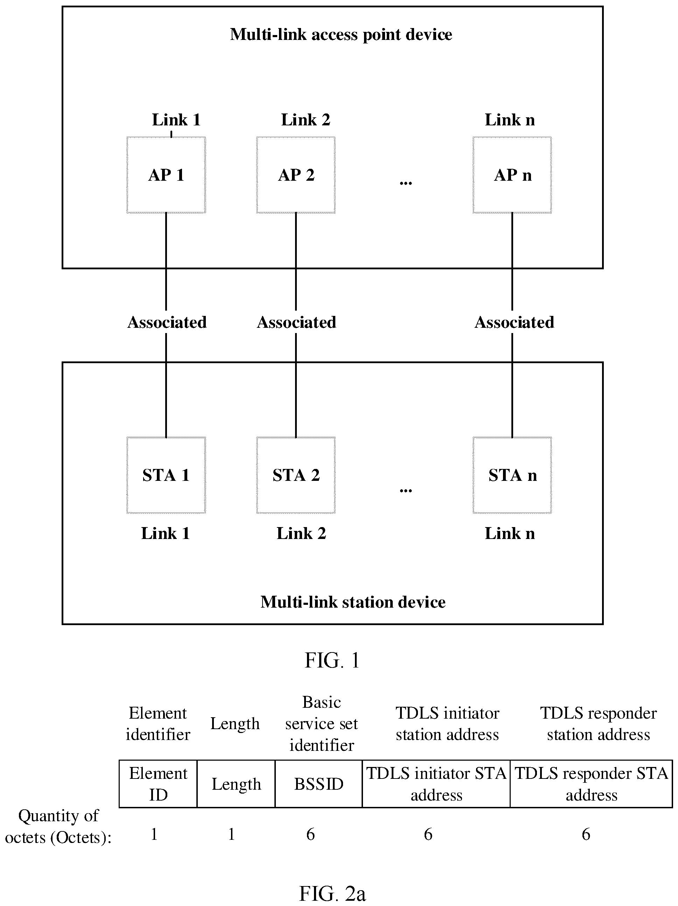

FIG. 1 is a schematic diagram of a communication system according to an embodiment of this application. It should be noted that, in the communication system shown in FIG. 1, an example in which a communication apparatus (a transmission apparatus applied to a tunneled direct link setup) in this application is a multi-link device is used for description. In some embodiments, the communication apparatus (a radio frame sending apparatus or a radio frame receiving apparatus) in this application may alternatively be a single-link device. FIG. 1 shows merely an example, and should not be construed as a limitation on this application.

As shown in FIG. 1, the communication system mainly includes at least one multi-link access point device (Multi-link AP device) and at least one multi-link non-access point station device (Multi-link non-AP STA device) (briefly referred to as a multi-link station device). The multi-link access point device and the multi-link station device may be collectively referred to as a multi-link device. The following describes the multi-link device.

Usually, the multi-link device includes one or more affiliated stations (affiliated station, denoted as affiliated STA). The affiliated STA is a logical station and may operate on a single link. The affiliated station may be an access point (access point, AP) or a non-access point station (non-access point station, non-AP STA). For ease of description, in this application, a multi-link device whose affiliated station is an AP may be referred to as a multi-link AP, a multi-link AP device (multi-link AP device), or an AP multi-link device (AP multi-link device); and a multi-link device (multi-link non-AP STA device) whose affiliated station is a non-AP STA may be referred to as a multi-link STA, a multi-link STA device, or a STA multi-link device (STA multi-link device). For ease of description, that "the multi-link device includes an affiliated STA" is also briefly described as that "the multi-link device includes a STA" in this embodiment of this application.

It should be noted that the multi-link device includes a plurality of logical stations, and each logical station operates on one link, but the plurality of logical stations are allowed to operate on a same link. A link identifier mentioned below represents one station operating on one link. In other words, if there is more than one station on one link, more than one link identifier needs to represent the more than one station. A link mentioned below sometimes also represents a station operating on the link.

During data transmission between the multi-link AP device and the multi-link STA, a link identifier may identify one link or a station on the link. Before communication, the multi-link AP device and the multi-link STA device may negotiate or communicate with each other about a correspondence between a link identifier and a link or a station on the link. Therefore, during data transmission, a link or a station on the link can be indicated without requiring a large amount of signaling information, provided that a link identifier is carried. This reduces signaling overheads and improves transmission efficiency.

In an example, a management frame, for example, a beacon (beacon) frame, sent by the multi-link AP device when a BSS is established carries an element including a plurality of link identification information fields, and a correspondence between a link identifier and a station operating on a link may be established in each link identification information field. Each link identification information field includes a link identifier, and further includes one or more of a medium access control (medium access control, MAC) address, an operation set, and a channel number. The one or more of the MAC address, the operation set, and the channel number may indicate a link. In another example, in a multi-link association establishment process, the multi-link AP device and the multi-link station device negotiate about a plurality of link identification information fields. In subsequent communication, the multi-link AP device or the multi-link station device may represent a station in the multi-link device by using the link identifier, and the link identifier may further represent one or more attributes in a MAC address of the station, an operation set, and a channel number. The MAC address may alternatively be replaced with an association identifier of the associated multi-link AP device.

If a plurality of stations operate on one link, the link identifier (a numeric ID) represents an operation set and a channel number corresponding to the link, and further represents an identifier of a station operating on the link, for example, a MAC address or an association identifier (association identifier, AID) of the station.

The multi-link device may implement wireless communication according to 802.11 series of standards. For example, a station complying with an extremely high throughput (extremely high throughput, EHT), or a station complying with 802.11be or compatible with a station supporting 802.11be implements communication with another device. Certainly, the another device may be a multi-link device, or may not be a multi-link device.

The non-AP MLD in this application may be a wireless communication chip, a wireless sensor, or a wireless communication terminal, for example, a user terminal, a user apparatus, an access apparatus, a subscriber station, a subscriber unit, a mobile station, a user agent, and user equipment that support Wi-Fi communication. The user terminal may be various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), a terminal device (terminal device), a portable communication device, a handheld device, a portable computing device, an entertainment device, a game device or system, a global positioning system device, any other proper device configured to perform network communication via a wireless medium, and the like. In addition, the non-AP MLD may support the 802.11be standard or a next-generation WLAN standard of the 802.11be standard. The non-AP MLD may also support a plurality of WLAN standards such as 802.11ax, 802.11ac, 802.11n, 802.11g, 802.11b, and 802.11a.

The AP MLD in this embodiment of this application may be an apparatus that is deployed in a wireless communication network to provide a wireless communication function for a non-AP associated with the AP MLD. The AP MLD is mainly deployed at home, inside a building, and in a campus, with a typical coverage radius of tens of meters to hundreds of meters. Certainly, the AP MLD may alternatively be deployed outdoors. The AP MLD is equivalent to a bridge that connects a wired network and a wireless network. A main function of the AP MLD is to connect various wireless network clients together and then connect the wireless network and the Ethernet. Specifically, the AP MLD may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP MLD may support the 802.11be standard or the next-generation WLAN standard of the 802.11be standard. The AP MLD may also support WLAN standards such as 802.11ax, 802.11ac, 802.11n, 802.11g, 802.11b, and 802.11a.

The foregoing content briefly describes the system architecture in embodiments of this application. To better understand the technical solutions in embodiments of this application, the following describes content related to embodiments of this application.

I. Tunneled direct link setup (tunneled direct link setup, TDLS)

In a WLAN communication network, there may be a plurality of stations (station, STA) associated with a same access point (access point, AP), and the plurality of STAs may be denoted as STAs. If the STA is in a wireless communication reachable range, the STA may set up a direct link based on a TDLS, to perform point-to-point communication, increase a transmission rate, and reduce a latency. Two stations may set up a direct link in a TDLS discovery process and a TDLS setup process, to perform point-to-point communication. When the direct link is no longer needed, the STA may disconnect the direct link by using a TDLS teardown (teardown) process.

1. TDLS discovery (discovery) process: In the TDLS discovery process, a TDLS initiator (TDLS initiator, briefly referred to as an initiator) needs to obtain information about a TDLS responder (TDLS responder, briefly referred to as a responder) in the TDLS discovery process. The following steps are specifically included.

Step 1: The initiator sends a tunneled direct link setup discovery request (TDLS discovery request) frame, where the TDLS discovery request frame carries related information of the initiator and a link identification information element (Link Identifier element), and the link identifier element carries related information of the direct link, including an initiator address, a responder address, and a BSSID. The BSSID is an identifier of a BSS in which the initiator and the responder are located. In other words, the initiator and the responder need to be in a same BSS.

Optionally, an implementation example of a frame format of the link identifier element is shown in FIG. 2a. In FIG. 2a, the link identifier element includes:

an element identifier (Element ID) field, which occupies 1 octet; a length (Length) field, which occupies 1 octet; a basic service set identifier (BSSID) field, which occupies 6 octets; a TDLS initiator station address (TDLS initiator STA Address) field, which occupies 6 octets; and a TDLS responder station address (TDLS responder STA Address) field, which occupies 6 octets.

Optionally, the initiator may send the TDLS discovery request frame to the responder by using the AP. For example, a process in which the initiator sends the TDLS discovery request frame includes: The initiator sends a first frame to the AP, where the first frame includes the TDLS discovery request frame; and further includes: The AP sends a second frame to the responder, where the second frame includes the TDLS discovery request frame.

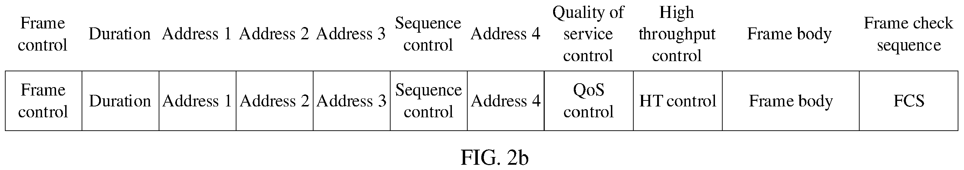

For example, a frame structure of a data frame that carries the TDLS discovery request frame and that is sent by the initiator to the AP is shown in FIG. 2b. The following information is included:

Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), High throughput control (high throughput control, HT Control), Frame body (Frame Body), and Frame check sequence (frame check sequence, FCS).

Optionally, in the example shown in FIG. 2b, other information (for example, at least one of "Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), and High throughput control (high throughput control, HT Control)") before "Frame body (Frame Body)" may be referred to as a MAC header (field).

Address 1 indicates a receiver address (RA, receiver address), Address 2 indicates a transmitter address (TA, transmitter address), and Address 3 depends on values of To DS and From DS fields in Frame Control.

When the data frame (when a transmitter is a STA and a receiver is an AP) is an uplink data frame, the Address 3 field indicates a destination address (destination address, DA).

When the data frame (when the transmitter is an AP and the receiver is a STA) is a downlink data frame, the Address 3 field indicates a source address (source address, SA).

Before the TDLS discovery process, the initiator may obtain a MAC address of the responder based on an ARP protocol or a proxy ARP protocol, to set a destination address field (DA) in the first frame to the MAC address of the responder. After receiving the first frame, the AP forwards the data frame. That is, another data frame is generated and sent to a second STA.

Optionally, in the TDLS discovery request frame, for a frame structure of a link identification information element carried in "Frame body (Frame Body)", refer to the implementation process shown in FIG. 2a.

It should be noted that the frame format shown in FIG. 2b may be further applied to another communication scenario other than the TDLS, for example, an association request frame (or an association response frame) receiving and sending scenario, a reassociation request frame (or a reassociation response frame) receiving and sending scenario, or another scenario. This is not limited herein.

Step 2: The responder sends a tunneled direct link setup discovery response (TDLS discovery response) frame to the initiator, where the TDLS discovery response frame carries related information of the responder and also includes a link identifier element, and content of the link identifier element is the same as content of the link identifier element in the TDLS discovery request frame. It should be noted that, if a value of a BSSID in the link identifier element in the TDLS discovery request received by the responder is different from a value of a BSSID of a BSS associated with the responder, the responder does not return the TDLS discovery response frame.

2. TDLS setup (setup) process: The initiator needs to set up a direct link between the initiator and the responder in the TDLS setup process. The following steps are specifically included.

Step 1: The initiator sends a tunneled direct link setup request (TDLS setup request) frame, where the TDLS setup request frame includes related information of the initiator and key generation related information, and is denoted as a tunneled direct link setup peer key handshake message 1 (TPK Handshake Message 1).

Optionally, a process in which the initiator sends the TDLS setup request frame may include: The initiator sends a third frame to the AP, where the third frame includes the TDLS setup request frame; and may further include: The AP sends a fourth frame to the responder, where the fourth frame includes the TDLS setup request frame.

Step 2: A response frame sends a tunneled direct link setup response (TDLS setup response) frame, where the TDLS setup response frame includes related information of the response frame and key generation related information, and is denoted as a tunneled direct link setup peer key handshake message 2 (TPK Handshake Message 2).

Optionally, a process in which the responder sends the TDLS setup response frame may include: The responder sends a fifth frame to the AP, where the fifth frame includes the TDLS setup response frame; and may further include: The AP sends a sixth frame to the responder, where the sixth frame includes the TDLS setup response frame.

Step 3: The initiator sends a TDLS setup confirm (TDLS setup confirm) frame, where the TDLS setup confirm frame includes related information of the initiator and key generation related information, and is denoted as a tunneled direct link setup peer key handshake message 3 (TPK Handshake Message 3).

Optionally, a process in which the initiator sends the TDLS setup confirm frame may include: The initiator sends a seventh frame to the AP, where the seventh frame includes the TDLS setup confirm frame; and may further include: The AP sends an eighth frame to the responder, where the eighth frame includes the TDLS setup confirm frame.

Optionally, the TPK handshake message 1, the TPK handshake message 2, the TPK handshake message 3 each include a robust security network element (robust security network element, RSNE) information element and a fast basic service set transition element (fast BSS Transition element, FTE) information element.

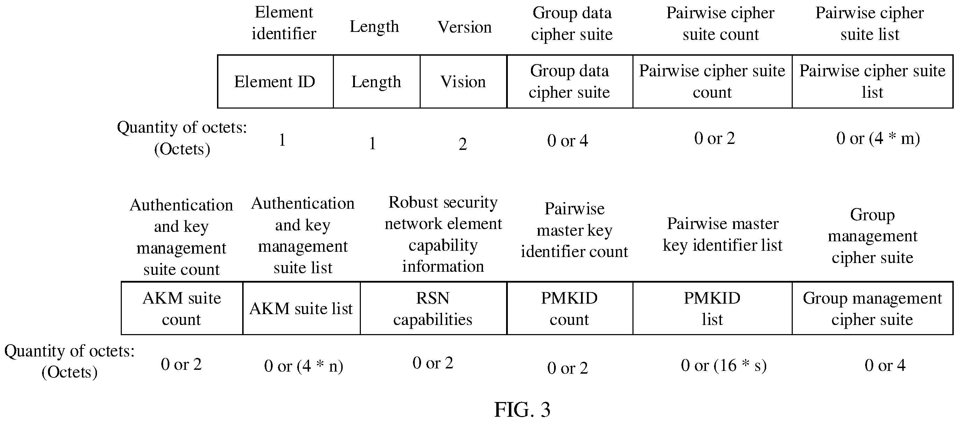

Optionally, an example of a frame format of the RSNE information element is shown in FIG. 3. In FIG. 3, the RSNE information element includes:

an element identifier (Element ID) field, which occupies 1 octet; a length (Length) field, which occupies 1 octet; a version (Vision) field, which occupies 2 octets; a group data cipher suite (Group Data Cipher Suite) field, which occupies 0 or 4 octets; a pairwise cipher suite count (Pairwise Cipher Suite Count) field, which occupies 0 or 2 octets; and a pairwise cipher suite list (Pairwise Cipher Suite List) field, which occupies 0 or (4 * m) (m is a quantity of pairwise cipher suites) octets. The RSNE information element further includes:

an authentication and key management suite count (authentication and key management suite count, AKM Suite Count) field, which occupies 0 or 2 octets; an authentication and key management suite list (authentication and key management suite list, AKM Suite List) field, which occupies 0 or (4 * n) (n is a quantity of authentication and key management suites) octets; a robust security network element capability information (RSN Capabilities) field, which occupies 0 or 2 octets; a pairwise master key identifier count (pairwise master key identifier count, PMKID count) field, which occupies 0 or 2 octets; a pairwise master key identifier list (pairwise master key identifier list, PMKID List) field, which occupies 0 or (16 * s) (s is a quantity of pairwise master key identifiers) octets; and a group management cipher suite (Group management Cipher Suite) field, which occupies 0 or 4 octets.

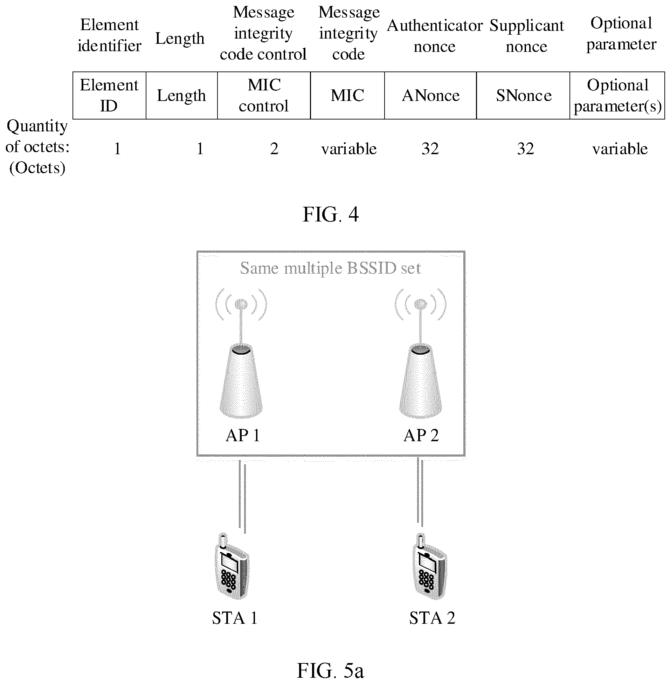

Optionally, an example of a frame format of the FTE information element is shown in FIG. 4. In FIG. 4, the FTE information element includes:

an element identifier (Element ID) field, which occupies 1 octet; a length (Length) field, which occupies 1 octet; a message integrity code control (message integrity code control, MIC Control) field, which occupies 2 octets; a message integrity code (message integrity code, MIC) field, where a quantity of occupied octets is a variable (variable); an authenticator nonce (authenticator nonce, ANonce) field, which occupies 32 octets; a supplicant nonce (supplicant nonce, SNonce) field, which occupies 32 octets; and an optional parameter (OptionalParameter(s)), where a quantity of occupied octets is a variable.

II. Multiple BSSID

A current 802.11 standard supports a feature of multiple basic service set identifier set (multiple basic service set identifier set, multiple BSSID, which may also be referred to as a multiple BSSID set). A basic function of the multiple BSSID set is to form a plurality of virtual APs in one device to serve different types of STAs. The plurality of virtual APs may perform joint management, to reduce management costs.

The multiple BSSID set may be a combination of some cooperative APs, and all the cooperative APs use a same operation set, a same channel number, and a same antenna port. Usually, in the multiple BSSID set, there is one AP corresponding to a transmitted BSSID (Transmitted BSSID), and another AP is an AP corresponding to a nontransmitted (Nontransmitted) BSSID. Information (that is, a multiple BSSID element) about the multiple BSSID set is carried in a management frame (for example, a beacon frame, a probe response frame, or a neighbor report) sent by an AP with a transmitted BSSID. Information about a BSSID of an AP with a nontransmitted BSSID is derived based on a multiple BSSID element, or the like in the received beacon frame, probe response frame, or neighbor report.

In addition, in a multiple BSSID technology, one physical AP may be virtualized into a plurality of logical APs, each virtual AP manages one BSS, and different virtual APs usually have different SSIDs and permission, for example, a security mechanism or a transmission opportunity. A BSSID of one virtual AP in the plurality of virtual APs is configured as a transmitted (Transmitted) BSSID, the virtual AP may be referred to as a transmitted (Transmitted) AP, a BSSID of another virtual AP is configured as a nontransmitted BSSID, and the virtual AP may be referred to as a nontransmitted (nontransmitted) AP. Usually, a plurality of APs of the multiple BSSID may also be understood as a plurality of cooperative AP devices into which one AP device is virtualized. Only an AP whose BSSID is a transmitted BSSID can send a beacon (beacon) frame and a probe response (Probe Response) frame. If a probe request (Probe Request) frame sent by a STA is destined for an AP whose BSSID is a nontransmitted BSSID in the multiple BSSID set, the AP whose BSSID is a transmitted BSSID needs to assist in returning a probe response frame. The beacon frame sent by the AP whose BSSID is a transmitted BSSID includes a multiple BSSID element, and another AP with a nontransmitted BSSID cannot send a beacon frame. Association identifiers (association identifier, AID) allocated by the plurality of virtual APs to stations managed by the plurality of virtual APs share one space. That is, AIDs allocated to stations in a plurality of virtual BSSs cannot be the same.

Optionally, as shown in Table 1, the multiple BSSID element includes an element ID, a length, a max BSSID indicator, and a subelement. A value (n) of the max BSSID indicator field is used to calculate a maximum quantity $2^n$ (that is, 2 raised to the power of n) of BSSIDs included in the multiple BSSID set. Optional subelements include information about each nontransmitted BSSID. A receiving end may calculate a value of each BSSID in the multiple BSSID set based on a reference BSSID, the max BSSID indicator, and a BSSID index. Each BSSID includes 48 bits. A value of high-order (48-n) bits of each BSSID in the plurality of BSSID set is the same as a value of high-order (48-n) bits of the reference BSSID, and a value of low-order n bits of each BSSID in the multiple BSSID set is obtained by performing a modulo operation on a sum of a value of low-order n bits of the reference BSSID and a value of the BSSID index x by $2^n$. The reference BSSID (that is, the transmitted BSSID) is carried in a BSSID field in a MAC header of a frame (for example, a beacon frame) including the multiple BSSID element. For a specific calculation method, refer to the 802.11-2016 standard protocol.

Table 1

| | Element ID | Length | Max BSSID indicator | Optional subelement |
|---|---|---|---|---|
| Octet | 1 | 1 | 1 | Variable |

The "optional subelement" in Table 1 may be shown in Table 2.

Table 2

| Subelement ID | Name | Extension |
|---|---|---|
| 0 | Nontransmitted BSSID profile | Non-extensible |
| 1-220 | Reserved | |
| 221 | Vendor specific | Vendor defined |
| 222-255 | Reserved | |

Optionally, in Table 2, the nontransmitted basic service set identifier profile (Nontransmitted BSSID profile) includes one or more APs that have nontransmitted BSSIDs or one or more elements of a directional multi-gigabit station (directional multi-gigabit station, DMG STA).

III. Address resolution protocol (address resolution protocol, ARP)

The address resolution protocol is a transmission control protocol (transmission control protocol, TCP) TCP/internet protocol (internet protocol, IP) of a physical address based on an IP address. When sending information, a host broadcasts an ARP request including an IP address of a target to all hosts in a local area network, and receives a returned message, to determine a physical address of the target. After receiving the returned message, the host stores the IP address and the physical address in a local ARP cache, and retains the IP address and the physical address for a period of time. When the IP address and the physical address are requested next time, the host directly queries the ARP cache to save resources.

The address resolution protocol operates on a network segment, and a proxy ARP (Proxy ARP) operates on different network segments. The ARP proxy is usually used by a device such as a router, to replace a host one another network segment to respond to an ARP request from a host on a same network segment. For example, a host 1 (an address is 192.168.20.66/24) needs to send a packet to a host 2 (an address is 192.168.20.20/24). Because the host 1 does not learn of existence of a subnet and the host 1 does not learn that the host 1 and the host 2 are on the same network segment, the host 1 sends an ARP protocol request broadcast packet to request a MAC address of 192.168.20.20. In this case, the router identifies that a target address of a packet belongs to another subnet. Therefore, the router returns a MAC address of the router to the host 1. Then, the host 1 sends, to the MAC address of the router, a data packet to be sent to the host 2, and the router forwards the data packet to the host 2. A proxy ARP protocol enables a subnet network topology to be transparent to the host (in other words, the router uses the MAC address of the router as a MAC address of a PC 2 to communicate with the host 1; in other words, the router deceives the host 1 by using an untrue MAC address of the host 2).

Currently, as described in the foregoing descriptions of a TDLS implementation process, in a multiple BSSID set, one BSS includes one AP and several STAs, and the several STAs connected to the AP may communicate with each other based on the TDLS. In a TDLS-based communication process between the several STAs, a to-be-received or to-be-sent TDLS radio frame need to carry a BSSID corresponding to the BSS.

For example, an implementation scenario is shown in FIG. 5a. A STA 1 is associated with an AP 1 and a STA 2 is associated with an AP 2. Because the AP 1 and the AP 2 are located in a same multiple BSSID set (Same Multiple BSSID set), a BSSID corresponding to the STA 1 is the same as a BSSID corresponding to the STA2, so that the STA 1 and the STA2 can communicate based on a TDLS.

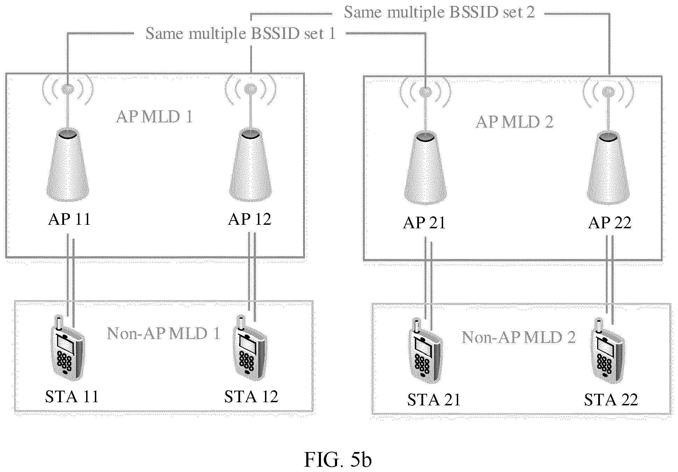

For example, an MLD implementation scenario shown in FIG. 5b is used as an example. In an AP MLD 1 and a non-AP MLD 1, a STA 11 is associated with an AP 11 and a STA 12 is associated with an AP 12. In an AP MLD 2 and a non-AP MLD 2, a STA 21 is associated with an AP 21 and a STA 22 is associated with an AP 22. The AP 11 and the AP 21 are located in a same multiple BSSID set 1 (Same Multiple BSSID set 1), and the AP 12 and the AP 22 are located in a same multiple BSSID set 2 (Same Multiple BSSID set 2). Therefore, a BSSID corresponding to the STA 11 is the same as a BSSID corresponding to the STA 21, so that the STA 11 and the STA 21 can communicate with each other based on the TDLS. In addition, a BSSID corresponding to the STA 12 is the same as a BSSID corresponding to the STA 22, so that the STA 12 and the STA 22 can communicate with each other based on the TDLS.

In addition, for a STA, when a BSSID included in a TDLS radio frame received by the STA is different from a BSSID corresponding to a BSS to which the STA belongs, the STA may determine that the STA and a transmitter of the TDLS radio frame do not belong to a same BSS, and does not reply (or respond) to the TDLS radio frame. In other words, a TDLS direct link can only be set up between stations in a same BSS. If two STAs belong to different BSSs, the two STAs cannot communicate based on the TDLS.

A same communication parameter (for example, an operation set, a channel number, and an antenna port) is used for different APs in a same multiple BSSID set, so that STAs associated with the different APs in the same multiple BSSID set may also need to perform communication based on the TDLS.

However, because the different APs in the same multiple BSSID set respectively correspond to different BSSIDs, STAs of the different APs are located may have different BSSIDs. Consequently, STAs associated with the different APs in the same multiple BSSID set cannot communicate with each other based on the TDLS.

Therefore, how to implement TDLS-based communication between STAs associated with different APs in a same multiple BSSID set is a technical problem to be resolved as soon as possible. In addition, in a same multiple BSSID set, if STAs of different APs are respectively affiliated with different MLDs, how to implement a TDLS between a plurality of MLDs is also a technical problem that needs to be resolved.

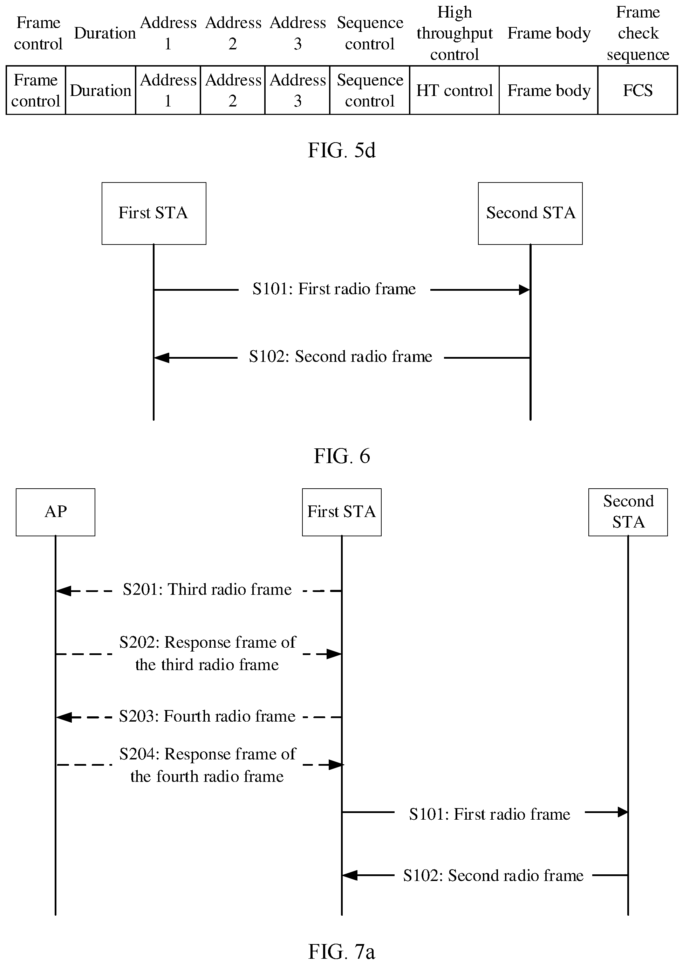

FIG. 6 is a schematic diagram of a transmission method applied to a TDLS according to this application. The method includes the following steps.

S101: A first STA sends a first radio frame.

In this embodiment, the first STA sends the first radio frame in step S101, and correspondingly, a second STA receives the first radio frame in step S101. The first radio frame includes initiator address information, responder address information, and a first BSSID, and the first BSSID is a BSSID in a multiple BSSID set including a BSSID of a BSS in which the first STA is located.

In a possible implementation, an initiator is the first STA, and a responder is the second STA; or the initiator is a first multi-link device MLD in which the first STA is located, and the responder is the second STA; or the initiator is the first STA, and the responder is a second MLD in which the second STA is located; or the initiator is a first MLD in which the first STA is located, and the responder is a second MLD in which the second STA is located.

Specifically, in a transmission process applied to the TDLS in step S101, an initiator indicated by the initiator address information carried in the first radio frame may be specifically the first STA or the first MLD in which the first STA is located, and a responder indicated by the responder address information carried in the first radio frame may be specifically the second STA or the second MLD in which the second STA is located, to implement a TDLS-based communication process between a plurality of single-link devices, between a plurality of multi-link devices, or between a multi-link device and a single-link device.

In a possible implementation, in step S101, the first BSSID carried in the first radio frame may be implemented in any one of the following manners, including:

the first BSSID is a transmitted BSSID in the multiple BSSID set; or
the first BSSID is a BSSID corresponding to the BSS in which the first STA is located; or
the first BSSID is a BSSID corresponding to the BSS in which the second STA is located.

Optionally, the first BSSID is any BSSID in the multiple BSSID set.

Specifically, in step S101 or before step S101, the first STA may determine the first BSSID in a pre-configuration manner (for example, in response to an input operation of a user or in a manner of performing pre-writing by the first STA before delivery) before step S101, and the first STA may also determine the first BSSID in an AP configuration manner before step S101, or may determine the first BSSID in another manner. This is not limited herein.

In a possible implementation, there may be a plurality of implementations of the responder address information carried in the first radio frame sent by the first STA in step S101. For example, the responder address information may be IP address information of the second STA (or the second MLD in which the second STA is located), and the responder address information may also be MAC address information of the second STA (or the second MLD in which the second STA is located), or other address information. This is not limited herein.

For example, in an implementation process shown in FIG. 7a, an example in which the responder address information is the MAC address information of the second STA is used for description. In FIG. 7a, before the first STA sends the first radio frame in step S101, the method further includes: The first STA sends a third radio frame to an AP associated with the first STA in step S201. The third radio frame includes IP address information of the second STA, and a query frame is used to request the MAC address information of the second STA. The first STA receives a response frame of the third radio frame from the AP associated with the first STA in step S202. The response frame of the third radio frame includes the MAC address information of the second STA.

Before the first STA sends the first radio frame, the first STA may further request a MAC address of the second STA based on the third radio frame that carries an IP address of the second STA, to determine, based on the response frame of the third radio frame, the MAC address that is of the second STA and that is carried in the first radio frame.

In an implementation example shown in FIG. 7a, the AP is an AP associated with the first STA, and the BSS in which the first STA is located and the BSS in which the second STA is located belong to a same multiple BSSID set. The AP may configure, in a same local area network (or a same subnet) in a pre-configuration manner, the BSS in which the first STA is located and the BSS in which the second STA is located, to determine the MAC address of the second STA. Alternatively, the AP may interact with the AP associated with the second STA, to determine the MAC address of the second STA.

Specifically, BSSs corresponding to different BSSIDs in a same Multiple BSSID set may be located in a same local area network, or may be located in different local area networks. If the BSSs are located in different local area networks, a current proxy ARP protocol returns a MAC address of the AP. In this case, a TDLS initiator (that is, the first STA) sets a value of address information of the second STA in the first radio frame to the MAC address of the AP, leading to a TDLS communication failure. To resolve this problem, a method is to configure, in a same local area network or a same subnet, BSSs corresponding to different BSSIDs in a same multiple BSSID set. In another method, the AP stores a mapping relationship between an IP address and a MAC address of a STA in another BSS in a same Multiple BSSID set. In this case, when receiving an ARP request from the initiator, the AP may feed back a correct MAC address of the responder (that is, the second STA) to the initiator (that is, the first STA).

It should be noted that, the first STA may determine the IP address of the second STA based on an input operation of a user, or the first STA may determine the IP address of the second STA based on configuration information/instruction of the AP, or the first STA may determine the IP address of the second STA in a two-dimensional code scanning manner, or the first STA may determine the IP address of the second STA in another manner. This is not limited herein.

For example, in the implementation process shown in FIG. 7a, an example in which the first BSSID is the BSSID corresponding to the BSS in which the second STA is located is used for description. When the first STA determines, in an AP configuration manner before step S101, the BSSID corresponding to the BSS in which the second STA is located, before step S101, the method further includes: The first STA sends, in step S203, a fourth radio frame to the AP associated with the first STA. The fourth radio frame includes the address information of the second STA, and the query frame is used to request the BSSID corresponding to the BSS in which the second STA is located. The first STA receives, in step S204, a response frame of the fourth radio frame from the AP associated with the first STA. The response frame of the fourth radio frame includes the BSSID corresponding to the BSS in which the second STA is located.

Specifically, the first BSSID carried in the first radio frame may be the BSSID corresponding to the BSS in which the second STA is located. Therefore, before the first STA sends the first radio frame in step S101, the first STA may further request, based on the fourth radio frame that carries the address information of the second STA, the BSSID corresponding to the BSS in which the second STA is located, to determine, based on the response frame of the fourth radio frame, the BSSID that corresponds to the BSS in which the second STA is located and that is carried in the first radio frame.

In a possible implementation, the first STA and the second STA are respectively affiliated with different MLDs. The first STA and the second STA are respectively affiliated with different MLDs, so that a plurality of STAs associated with different MLDs in a same multiple BSSID set can communicate with each other based on the TDLS.

Optionally, the first STA and the second STA are affiliated with a same MLD. The first STA and the second STA are affiliated with a same MLD, so that a plurality of STAs associated with a same MLD in a same multiple BSSID set communicate with each other based on the TDLS.

In a possible implementation, in the first radio frame sent by the first STA in step S101, the first radio frame includes a link identification information (Link Identifier element, LIE) element; the link identification information element includes the initiator address information, the responder address information, and the first BSSID; and the initiator address information is the MAC address information of the first STA.

Optionally, the first STA is a single-link device.

Specifically, a receiver (for example, the second STA) of the first radio frame may receive the MAC address information of the first STA based on the link identification information element. Therefore, the receiver of the first radio frame may receive the MAC address information of the first STA from a location at which the link identification information element in the first radio frame is located, and subsequently, the receiver of the first radio frame communicates with the first STA based on the MAC address information of the first STA.

Optionally, the first STA is a STA in the multi-link device.

For example, it can be learned from the foregoing descriptions of a tunneled direct link setup (tunneled direct link setup, TDLS) that a link identification information element shown in FIG. 2a may be carried in a radio frame transmitted during TDLS-based communication.

If a TDLS-based communication process does not relate to a multi-link communication scenario, that is, if a STA is a single-link device, when the STA sends a radio frame, the STA may set a value of a field "TDLS initiator station address" shown in FIG. 2a to the MAC address information of the STA, to indicate that the STA is a TDLS initiator in the TDLS-based communication process.

If a TDLS-based communication process relates to a multi-link communication scenario, that is, when a STA is a STA in a multi-link device, the STA serves as a transmitter, and may execute the communication process shown in FIG. 6. In other words, the first radio frame sent by the STA (that is, the first STA) carries a multi-link element indicating multi-link information of an MLD in which the STA is located.

An example in which the first radio frame sent by the first STA in step S101 is a TDLS discovery request frame transmitted in a TDLS-based communication process is used for description. In the first radio frame, the value of the TDLS initiator STA address field in the link identification information element may be an MLD MAC address of a first MLD. Such a setting is to keep a value of a SA of a data frame forwarded by the AP to the second STA to be consistent with the MLD MAC address of the first MLD, so that when the second STA receives the forwarded data frame, the second STA can obtain consistent initiator addresses based on the SA or based on the TDLS initiator STA address, to avoid confusion.

Specifically, the TDLS discovery request frame may be encapsulated in a data frame (denoted as a first data frame) sent by the first STA to an AP associated with the first STA. For a frame format of the first data frame, refer to FIG. 5a. Compared with FIG. 2b, FIG. 5a describes in detail information included in a "frame body (Frame Body)". The TDLS discovery request frame may be specifically carried in the "frame body (Frame Body)". As shown in FIG. 5a, the "frame body (Frame Body)" includes the following information:

a category (Category), a TDLS action (TDLS Action), a dialog token (Dialog Token), a link identification information element (Link Identifier), and a multi-link element (Multi-Link element).

In the first data frame, an address 1 of the first data frame is a MAC address of an AP, an address 2 is an address of the first STA, and an address 3 is an MLD MAC address of the second MLD.

Then, when the TDLS discovery request frame is forwarded by the AP, the TDLS discovery request frame is carried in another data frame (denoted as a second data frame) for sending (for a frame format of the second data frame, refer to FIG. 2b). In the second data frame, an address 1 of the second data frame is a MAC address of the second STA, an address 2 is a MAC address of an AP (it is noted that because the MAC address may be forwarded on another link, the address may be different from the MAC address of the AP in the first data frame), and an address 3 is the MLD MAC address of the first MLD. Consequently, when receiving the second data frame, the second STA cannot learn of the MAC address of the first STA, and consequently, cannot obtain the address information of the first STA in a TDLS discovery process.

To resolve this problem, when sending the TDLS discovery request frame, the first STA use, to carry the MAC address of the first STA, the first data frame that carries the TDLS discovery request frame. The MAC address of the first STA may be carried in a multi-link element in the first data frame.

In a possible implementation, the first radio frame sent by the first STA in step S101 includes a link identification information element and a multi-link element; the link identification information element includes the initiator address information, the responder address information, and the first BSSID, and the initiator address information is the MAC address information of the first MLD in which the first STA is located; and the multi-link element includes the MAC address information of the first STA.

Specifically, the first radio frame sent by the first STA may further carry a multi-link element indicating link information of the first MLD in which the first STA is located. In a transmission process applied to the TDLS, the initiator address information may be the MAC address information of the first MLD in which the first STA is located, to indicate that the TDLS initiator is the first MLD, so that subsequently, the second STA (or the second MLD in which the second STA is located) can implement a TDLS-based communication process with the first MLD based on the first radio frame.

Optionally, the multi-link element includes a common information field, and the MAC address information of the first STA is located in the common information (Common Info) field. Specifically, the MAC address information of the first STA is located in the common information field of the first multi-link element included in the first radio frame, so that the receiver of the first radio frame can determine the MAC address information of the first STA based on the common information field.

Optionally, the first radio frame includes a multi-link element, the multi-link element includes a first field, and the first field indicates whether the multi-link element includes the MAC address information of the first STA.

Optionally, when a value of the first field is a first value, the first field indicates that the multi-link element in the first radio frame includes the MAC address information of the first STA.

Therefore, for the transmitter (that is, the first STA) of the first radio frame, the MAC address information of the first STA may be carried in the multi-link element based on the first field, and an indication of the first field is applicable to a communication scenario (for example, a TDLS scenario) in which the receiver of the first radio frame needs to receive the MAC address information of the first STA. Correspondingly, the receiver (that is, the second STA) of the first radio frame may determine, based on the first field, that the MAC address information of the first STA needs to be received, and receive the MAC address information of the first STA in the multi-link element. That is, the second STA may accurately learn of the MAC address information of the first STA.

Optionally, when the value of the first field is a second value, the first field indicates that the multi-link element in the first radio frame does not include the MAC address information of the first STA. Specifically, when the first field indicates that the multi-link element does not include the MAC address information of the first STA, the MAC address information of the first STA is located at another location in the first radio frame other than the multi-link element, or the first radio frame does not carry the MAC address information of the first STA.

Optionally, the first value is different from the second value.

Therefore, for the transmitter of the first radio frame, whether the multi-link element includes the MAC address information of the first STA may be flexibly set in the multi-link element based on the first field. Correspondingly, the receiver of the first radio frame flexibly chooses, based on the first field, whether to receive the MAC address information of the first STA in the multi-link element.

For example, the communication process shown in FIG. 6 may also be applied to another communication scenario between multi-link devices other than the TDLS. In this scenario, the receiver of the first radio frame may not need to learn of the MAC address information of the first STA (or at another location other than the multi-link element), for example, a scenario of receiving and sending an association request frame (or an association response frame), a scenario of receiving and sending a reassociation request frame (or a reassociation response frame), or another scenario. This is not limited herein.

In a possible implementation, in a process of implementing, without forwarding performed by a forwarding device, a process of sending and receiving the first radio frame, the first radio frame may use the MAC header field to carry the MAC address information of the first STA. In an implementation process of the frame format shown in FIG. 2b, the MAC address information of the first STA may be carried in the A2 field. The first field indicates that the multi-link element does not include the MAC address information of the first STA, so that the receiver of the first radio frame can receive the MAC address information of the first STA in the MAC header field. In addition, because the first radio frame does not need to use the multi-link element to carry information (that is, the MAC address information of the first STA) the same as that in the MAC header field, transmission of redundant data can be reduced to some extent, and communication efficiency can be improved.

In another possible implementation, the receiver of the first radio frame may not need to learn of the MAC address information of the first STA. The receiver of the first radio frame may require only some information in the multi-link element, and does not need to learn of the MAC address information of the first STA. For example, the receiver of the first radio frame needs to learn of an "MLD MAC address" of an MLD in which the first STA is located in the frame format of the multi-link element shown in FIG. 4, so that when communicating with the MLD, the receiver of the first radio frame does not need to learn of the MAC address information of the first STA. For another example, the receiver of the first radio frame needs to learn of "per-STA profile x 307" of another STA in an MLD in which the first STA is located in the frame format of the multi-link element shown in FIG. 4, so that when communicating with the another STA in the MLD, the receiver of the first radio frame does not need to learn of the MAC address information of the first STA.

Optionally, the first radio frame further includes a target field, and when the first field indicates that the multi-link element does not include the MAC address information of the first STA, the target field includes the MAC address information of the first STA. The target field is different from the multi-link element.

Optionally, the target field may be a medium access control header (medium access control header, MAC Header) field.

Optionally, in the example shown in FIG. 2b, other information (for example, at least one of "Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), and High throughput control (high throughput control, HT Control)") before "Frame body (Frame Body)" may be referred to as a MAC header (field).

Optionally, when the first field indicates that the multi-link element does not include the MAC address information of the first STA, the first radio frame includes any one of the following:

an association request frame, a reassociation request frame, an association response frame, a reassociation response frame, or a probe response frame.

Optionally, when the first field indicates that the multi-link element does not include the MAC address information of the first STA, a communication process corresponding to an implementation solution shown in FIG. 6 may be an association process, a reassociation process, a probe process, or the like of the multi-link device.

In a possible implementation, the first field is located in a presence bitmap (Presence Bitmap) field in the multi-link element. Specifically, the first field is located in the presence bitmap field in the multi-link element included in the first radio frame, so that the receiver of the first radio frame can determine the first field based on the presence bitmap field.

In a possible implementation, the BSSID of the BSS in which the first STA is located is different from the BSSID of the BSS in which the second STA is located. Specifically, the BSSID of the BSS in which the first STA is located is different from the BSSID of the BSS in which the second STA is located. In other words, the TDLS initiator and the TDLS responder respectively belong to BSSs corresponding to different BSSIDs in a same multiple BSSID set. In this way, STAs in different BSSs implement TDLS transmission by using a radio frame to carry a BSSID in the multiple BSSID set, so that a plurality of STAs associated with different BSSs in a same multiple BSSID set communicate with each other based on the TDLS.

In a possible implementation, the BSSID of the BSS in which the first STA is located is the same as the BSSID of the BSS in which the second STA is located. Specifically, the BSSID of the BSS in which the first STA is located is the same as the BSSID of the BSS in which the second STA is located. In other words, the TDLS initiator and the TDLS responder belong to a BSS corresponding to a same BSSID in a same multiple BSSID set. In this way, a plurality of STAs in a same BSS implement TDLS transmission by using a radio frame to carry a BSSID in the multiple BSSID set, so that a plurality of STAs associated with a same BSS in a same multiple BSSID set communicate with each other based on the TDLS.

S102: The second STA sends a second radio frame.

In this embodiment, the second STA sends the second radio frame in step S102, and correspondingly, the first STA receives the second radio frame in step S102.

Specifically, after the second STA receives the first radio frame in step S101, when the first BSSID carried in the first radio frame is a BSSID in the multiple BSSID set including the BSS in which the second STA is located, the second STA determines that the first STA and the second STA belong to a same multiple BSSID set. Therefore, the second STA may communicate with the first STA based on the TDLS, to perform step S102.

Optionally, when the first BSSID carried in the first radio frame is not a BSSID in the multiple BSSID set including the BSS in which the second STA is located, the second STA determines that the first STA and the second STA do not belong to a same multiple BSSID set. Therefore, the second STA cannot communicate with the first STA based on the TDLS, that is, does not perform step S102.

For example, a scenario shown in FIG. 5b is used as an example. If the transmitter (that is, the first STA) of the first radio frame is the STA 11, the receiver of the first radio frame may be the STA 21 or the STA 22. For example, when the second STA is the STA 21, the STA 21 determines, based on the first BSSID carried in the first radio frame, that the STA 11 and the STA 21 are located in a same multiple BSSID set (Same Multiple BSSID set). In this case, the STA 21 can serve as the second STA and communicate with the STA 11 based on the TDLS. For another example, when the second STA is the STA 22, the STA 22 determines, based on the first BSSID carried in the first radio frame, that the STA 11 and the STA22 are not located in a same multiple BSSID set. In this case, the STA 41 cannot serve as the second STA and communicate with the STA 11 based on the TDLS.

In a possible implementation, the second radio frame sent by the second STA in step S102 includes a link identification information element; the link identification information element includes the initiator address information, the responder address information, and the second BSSID.

Optionally, the responder address information is MAC address information of MAC of the second STA.

Optionally, the second STA is a single-link device.

Specifically, a receiver (for example, the first STA) of the second radio frame may receive the MAC address information of the second STA based on the link identification information element. Therefore, the receiver of the second radio frame may receive the MAC address information of the second STA from a location at which the link identification information element in the second radio frame is located, and subsequently, the receiver of the second radio frame communicates with the second STA based on the MAC address information of the second STA.

In a possible implementation, the second radio frame sent by the second STA in step S 102 includes a link identification information element and a multi-link element; the link identification information element includes the initiator address information, the responder address information, and the second BSSID, and the responder address information is MAC address information of the second MLD in which the second STA is located; and the multi-link element includes MAC address information of the second STA.

Optionally, the second STA is a STA in the multi-link device.

Specifically, the second radio frame sent by the second STA may further carry a multi-link element indicating link information of the second MLD in which the second STA is located. In the transmission process applied to the TDLS, the responder address information may be the MAC address information of the second MLD in which the second STA is located, to indicate that the TDLS responder is the second MLD, so that subsequently, the first STA (or the first MLD in which the first STA is located) can implement a TDLS-based communication process with the second MLD based on the second radio frame.

Optionally, the multi-link element includes a common information field, and the MAC address information of the second STA is located in the common information field. The MAC address information of the second STA is located in the common information field of the second multi-link element included in the second radio frame, so that the receiver of the second radio frame can determine the MAC address information of the second STA based on the common information field.

Optionally, the second radio frame includes a multi-link element, the multi-link element includes a second field, and the second field indicates whether the multi-link element includes the MAC address information of the second STA.

Optionally, when a value of the first field is a first value, the first field indicates that the multi-link element in the second radio frame includes the MAC address information of the second STA.

Optionally, when the value of the first field is a second value, the first field indicates that the multi-link element in the second radio frame does not include the MAC address information of the second STA.

Optionally, the first value is different from the second value.

In addition, the second field is located in a presence bitmap field in the multi-link element. Specifically, the first field is located in the presence bitmap field in the multi-link element included in the first radio frame, so that the receiver of the first radio frame can determine the first field based on the presence bitmap field.

In a possible implementation, the first radio frame sent by the first STA in step S101 is a TDLS discovery request frame, and the second radio frame sent by the second STA in step S102 is a TDLS discovery response frame; or the first radio frame sent by the first STA in step S101 is a TDLS setup request frame, and the second radio frame sent by the second STA in step S102 is a TDLS setup response frame.

Specifically, the method may be used in a plurality of communication processes applied to the TDLS. When the first radio frame is a TDLS discovery request frame and the second radio frame is a TDLS discovery response frame, the method is applied to a TDLS discovery process; or when the first radio frame is a TDLS setup request frame and the second radio frame is a TDLS setup response frame, the method is applied to a TDLS setup process.

In addition, the first radio frame includes a first information element, and the first information element includes the initiator address information, the responder address information, and the first BSSID; the second radio frame includes a second information element, and the second information element includes the initiator address information, the responder address information, and the second BSSID; and the multiple BSSID set includes the second BSSID.

Optionally, the first information element is a link identification information element (Link Identifier element).

Optionally, the second information element is a link identification information element (Link Identifier element).

Specifically, when the method is applied to the TDLS discovery process or the TDLS setup process, the initiator address information, the responder address information, and the first BSSID may be included in the first information element in the first radio frame. For example, the first information element is included in a TDLS discovery request frame, or the first information element is included in the TDLS setup request frame. In addition, as the response frame of the first radio frame, the second radio frame may also carry a second information element carrying the initiator address information, the responder address information, and the second BSSID. For example, the second information element is included in a TDLS discovery response frame, or the second information element is included in a TDLS setup response frame.

In addition, the second BSSID is a BSSID in the multiple BSSID set including the BSSID of the BSS in which the first STA is located. In this case, when BSSs in which different STAs are located belong to a same multiple BSSID set, different STAs implement TDLS transmission (including a TDLS discovery and/or a TDLS setup) by using a response frame of a radio frame to carry a BSSID in the multiple BSSID set, so that different STAs associated with a same multiple BSSID set communicate with each other based on the TDLS.

Optionally, the second BSSID satisfies any one of the following:

the second BSSID is a transmitted basic service set identifier (transmitted BSSID) in the multiple BSSID set; or
the second BSSID is a BSSID corresponding to the BSS in which the first STA is located; or
the second BSSID is a BSSID corresponding to the BSS in which the second STA is located.

Optionally, the second BSSID is any BSSID in the multiple BSSID set.

Optionally, the first BSSID is the same as the second BSSID. Specifically, the first BSSID carried in the first radio frame and the second BSSID carried in the second radio frame may be a same BSSID. To be specific, after receiving the first radio frame that carries the first BSSID, a receiver of the first radio frame uses the response frame of the first radio frame to carry the second BSSID the same as the first BSSID. In this way, implementation complexity of the second radio frame is reduced, and a transmitter of the first radio frame determines, based on a same BSSID, that the second radio frame is the response frame of the first radio frame.

Optionally, the first BSSID is different from the second BSSID. Specifically, the first BSSID carried in the first radio frame and the second BSSID carried in the second radio frame may be different BSSIDs. To be specific, after receiving the first radio frame that carries the first BSSID, a receiver of the first radio frame uses the response frame of the first radio frame to carry the second BSSID different from the first BSSID. Therefore, the receiver of the first radio frame does not need to be limited by a setting of the BSSID carried in the first radio frame, to improve implementation flexibility of the second radio frame.

In a possible implementation, the first radio frame is a TDLS setup confirm frame and the second radio frame is a first acknowledgment frame; or the first radio frame is a TDLS data frame and the second radio frame is a second acknowledgment frame. Specifically, the method may be used in a plurality of communication processes applied to the TDLS. When the first radio frame is a TDLS setup confirm (confirm) frame and the second radio frame is a first acknowledgment frame, the process may be referred to as a TDLS authentication process; and when the first radio frame is a TDLS data frame and the second radio frame is a second acknowledgment frame, the process may be referred to as a TDLS data frame transmission process.

Optionally, the first acknowledgment frame (or a second response frame) may be an acknowledgment (acknowledge, ACK) frame, or the second acknowledgment frame may be a block acknowledgment (block acknowledge, Block ACK, BA for short) frame.

In a possible implementation, the first radio frame sent by the first STA in step S 101 further includes a TPK handshake message, the TPK handshake message carries a parameter required for generating a TPK, and the parameter includes the first BSSID. Specifically, the first radio frame further includes a parameter required for carrying the TPK, and the parameter includes a first BSSID. The TPK is a key used for TDLS communication, so that the key is generated based on the first BSSID (or the second BSSID). This provides a key generation manner used when different STAs associated with a same multiple BSSID set communicate with each other based on the TDLS.

It can be learned from the foregoing descriptions that communication processes in FIG. 6 and FIG. 7a may be TDLS-based communication processes. There are a plurality of implementations of the first radio frame and the second radio frame in the communication processes in FIG. 6 and FIG. 7a in the TDLS-based communication process. For example, in the TDLS discovery process, the first radio frame is a TDLS discovery request frame, and the second radio frame is a TDLS discovery response frame. For another example, in a process corresponding to a TDLS setup request and response, the first radio frame is a TDLS setup request frame, and the second radio frame is a TDLS setup response frame. For another example, in a TDLS confirmation process, the first radio frame is a TDLS setup confirm frame, and the second radio frame is a first acknowledgment frame. For another example, in a TDLS data transmission process, the first radio frame is a TDLS data frame, and the second radio frame is a second acknowledgment frame.

In some embodiments, a frame structure of the first radio frame (for example, when the first radio frame is a TDLS discovery request frame, a TDLS setup request frame, a TDLS setup response frame, a TDLS setup confirm frame, or a TDLS data frame) is shown in FIG. 2b. The following information is included:

Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), High throughput control (high throughput control, HT Control), Frame body (Frame Body), and Frame check sequence (frame check sequence, FCS).

Address 1 indicates a receiver address (RA, receiver address), Address 2 indicates a transmitter address (TA, transmitter address), and Address 3 depends on values of To DS and From DS fields in Frame Control.

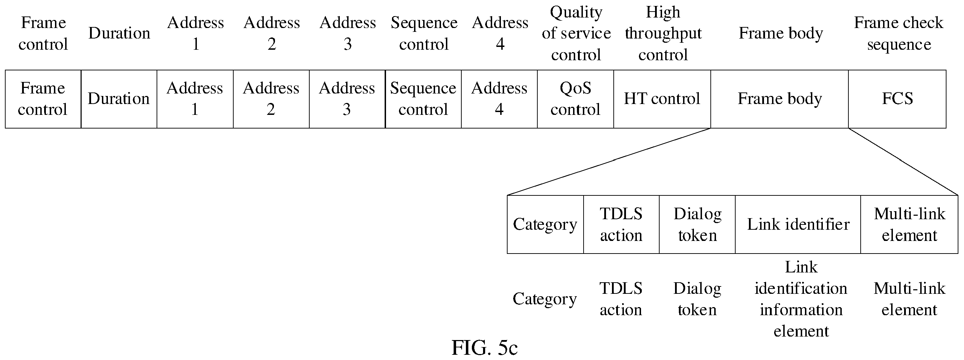

In some other embodiments, a frame structure of the first radio frame (for example, when the first radio frame is a TDLS discovery request frame, a TDLS setup request frame, a TDLS setup response frame, a TDLS setup confirm frame, or a TDLS data frame) is shown in FIG. 5c. Compared with FIG. 2b, FIG. 5c describes in detail information included in a "frame body (Frame Body)". The TDLS discovery request frame may be specifically carried in the "frame body (Frame Body)". As shown in FIG. 5c, the "frame body (Frame Body)" includes the following information:
a category (Category), a TDLS action (TDLS Action), a dialog token (Dialog Token), a link identification information element (Link Identifier), and a multi-link element (Multi-Link element).

Optionally, when the transmitter (that is, the first STA) of the first radio frame is not a STA in an MLD, the "frame body (Frame Body)" does not include the multi-link element.

In some other embodiments, a frame structure of the first radio frame (for example, when the first radio frame is a TDLS discovery response frame) is shown in FIG. 5d. Compared with the frame structure shown in FIG. 5a or FIG. 5b, in the frame structure in FIG. 5d, some information may be omitted. For example, the following information is omitted: an address 4 (Address 4) and quality of service control (quality of service control, QoS Control).

In different implementation processes, the first STA may receive and send the first radio frame and the second radio frame on a communication link between the first STA and the second STA; or the first STA may receive and send the first radio frame and the second radio frame on a communication link between the first STA and the AP associated with the first STA. Correspondingly, there may be a plurality of different implementations of the first radio frame and the second radio frame on different communication links. The following separately provides descriptions.

In a possible implementation, the first radio frame includes a TDLS discovery request frame, a TDLS setup request frame, or a TDLS setup confirm frame; and that the first STA (in step S101 shown in FIG. 6 or step S101 shown in FIG. 7a) sends the first radio frame includes: The first STA sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

Specifically, the method shown in FIG. 6 or FIG. 7a may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The first STA may send the first radio frame to the first AP associated with the first STA. The first radio frame further includes an A1 field indicating a receiver address (receiver address, RA) of the first radio frame, an A2 field indicating a transmitter address (transmitter address, TA) of the first radio frame, and an A3 field indicating a destination address (destination address, DA) of the first radio frame.

In a possible implementation, the first radio frame is a TDLS data frame; and that the first STA (in step S 101 shown in FIG. 6 or step S 101 shown in FIG. 7a) sends the first radio frame includes: The first STA sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

Specifically, the method shown in FIG. 6 or FIG. 7a may be applied to a plurality of TDLS-based transmission processes, for example, a TDLS data transmission process. In other words, the first radio frame is a TDLS data frame. The first STA may specifically send the first radio frame to the second STA. The first radio frame further includes an A1 field indicating a RA of the first radio frame, an A2 field indicating a TA of the first radio frame, and an A3 field indicating a DA of the first radio frame.

In a possible implementation of any one of the first aspect to the twelfth aspect, the second radio frame is a TDLS setup response frame; and that the first STA(in step S 102 shown in FIG. 6 or step S102 shown in FIG. 7a) receives the second radio frame includes: The first STA receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

Specifically, the method shown in FIG. 6 or FIG. 7a may be applied to a plurality of TDLS-based transmission processes, for example, a TDLS setup process. The second radio frame is specifically a TDLS setup response frame. The first STA may receive the second radio frame sent by the first AP associated with the first STA. The second radio frame further includes an A1 field indicating a RA of the second radio frame, an A2 field indicating a TA of the second radio frame, and an A3 field indicating a DA of the second radio frame.

In a possible implementation, the second radio frame includes a TDLS discovery response frame, a response frame of the TDLS setup confirm frame, or a response frame of the TDLS data frame; and that the first STA (in step S 102 shown in FIG. 6 or step S 102 shown in FIG. 7a) receives the second radio frame includes: The first STA receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Specifically, the method shown in FIG. 6 or FIG. 7a may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The first STA may receive the second radio frame sent by the second STA. The second radio frame further includes an A1 field indicating a RA of the second radio frame, an A2 field indicating a TA of the second radio frame, and an A3 field indicating a DA of the second radio frame.

In a possible implementation, the first radio frame includes a TDLS discovery request frame, a TDLS setup request frame, or a TDLS setup confirm frame; and that the second STA (in step S101 shown in FIG. 6 or step S101 shown in FIG. 7a) receives the first radio frame includes: The second STA receives the first radio frame from a second AP associated with the second STA. The first radio frame further includes an A1 field, an A2 field, and an A3 field. A value of the A1 field is the address information of the second STA, a value of the A2 field is address information of the second AP, and a value of the A3 field is the initiator address information.

Specifically, the method shown in FIG. 6 or FIG. 7a may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The second STA may receive the first radio frame sent by the second AP associated with the second STA. The first radio frame further includes an A1 field indicating a RA of the first radio frame, an A2 field indicating a TA of the first radio frame, and an A3 field indicating a DA of the first radio frame.

In a possible implementation, the first radio frame is a TDLS data frame; and that the second STA receives the first radio frame includes: The second STA (in step S101 shown in FIG. 6 or step S101 shown in FIG. 7a) receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

Specifically, the method shown in FIG. 6 or FIG. 7a may be applied to a plurality of TDLS-based transmission processes, for example, a TDLS data transmission process. In other words, the first radio frame is a TDLS data frame.

The second STA may specifically receive the first radio frame sent by the first STA. The first radio frame further includes an A1 field indicating a RA of the first radio frame, an A2 field indicating a TA of the first radio frame, and an A3 field indicating a DA of the first radio frame.

In a possible implementation, the second radio frame is a TDLS setup response frame, and that the second STA (in step S 102 shown in FIG. 6 or step S 102 shown in FIG. 7a) sends the second radio frame includes: The first STA sends the second radio frame to a second AP associated with the second STA. The second radio frame includes an A1 field, an A2 field, and an A3 field. A value of the A1 field is address information of the second AP, a value of the A2 field is the address information of the second STA, and a value of the A3 field is the initiator address information.

Specifically, the method shown in FIG. 6 or FIG. 7a may be applied to a plurality of TDLS-based transmission processes, for example, a TDLS setup process. The second radio frame is specifically a TDLS setup response frame. The second STA may specifically send the second radio frame to the second AP associated with the second STA. The second radio frame further includes an A1 field indicating a RA of the second radio frame, an A2 field indicating a TA of the second radio frame, and an A3 field indicating a DA of the second radio frame.

In a possible implementation, the second radio frame includes a TDLS discovery response frame, a response frame of the TDLS setup confirm frame, or a response frame of the TDLS data frame; and that the second STA (in step S 102 shown in FIG. 6 or step S 102 shown in FIG. 7a) sends the second radio frame includes: The second STA sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Specifically, the method shown in FIG. 6 or FIG. 7a may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The second STA may specifically send the second radio frame to the second STA associated with the second STA. The second radio frame further includes an A1 field indicating a RA of the second radio frame, an A2 field indicating a TA of the second radio frame, and an A3 field indicating a DA of the second radio frame.

In a possible implementation, in the foregoing plurality of implementation processes, the responder is the second STA or the second MLD in which the second STA is located. Specifically, in a plurality of transmission processes applied to the TDLS, a responder indicated by the responder address information included in the first radio frame (or the second radio frame) may be the second STA or the second MLD in which the second STA is located. In other words, a responder in a TDLS communication link may be the second STA or the second MLD in which the second STA is located.

In a possible implementation, in the foregoing plurality of implementation processes, the initiator is the first STA or the first MLD in which the first STA is located. Specifically, in a plurality of transmission processes applied to the TDLS, an initiator indicated by the initiator address information included in the first radio frame (or the second radio frame) may be the first STA or the first MLD in which the first STA is located. In other words, a responder in a TDLS communication link may be the first STA or the first MLD in which the first STA is located.

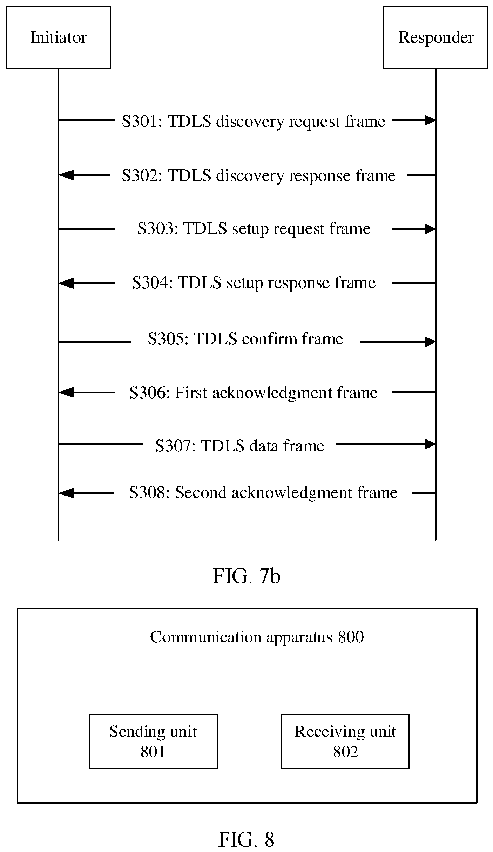

It can be learned from the foregoing descriptions that step S101 and step S102 may be used in a plurality of communication processes applied to the TDLS. For example, an implementation process shown in FIG. 7b is used as an example. It should be noted that, an implementation method shown in FIG. 6 is applied to a TDLS-based transmission process. Usually, the TDLS-based transmission process may be executed by a TDLS initiator (TDLS initiator) and a TDLS responder (TDLS responder). In the following implementation process shown in FIG. 7b, an example in which a transmitter (that is, a first STA) of a first radio frame is a TDLS initiator (briefly referred to as an initiator) and a receiver (that is, a second STA) of a first radio frame is a TDLS responder (briefly referred to as a responder) is used for description.

Implementation 1: The first radio frame and a second radio frame are respectively a TDLS discovery request frame and a TDLS discovery response frame in a TDLS discovery (discovery) process. In this case, an exchange process of the first radio frame and the second radio frame in step S101 and step S102 may be implemented by using an exchange process of the TDLS discovery request frame (that is, the TDLS discovery request frame) and the TDLS discovery response frame (that is, the TDLS discovery response frame) in step S301 and step S302 shown in FIG. 7b.

In an implementation process in step S301, because the initiator and the responder may be located in a same BSS, or the initiator and the initiator may be located in different BSSs in a same multiple BSSID set. When the initiator sends the TDLS discovery request frame, the initiator may need to send the TDLS discovery request frame for a plurality of times. Each time the TDLS discovery request frame is sent, a value of a BSSID field in a carried link identifier element is a different BSSID in a same multiple BSSID set.

Optionally, the initiator may preferentially set the value of the BSSID field in the link identifier element to any BSSID in the multiple BSSID set in which the initiator is located; or the initiator may set the value of the BSSID field in the link identifier element to a transmitted BSSID in the multiple BSSID set, and then attempt to set the value of the BSSID field in the link identifier element to another BSSID in the multiple BSSID set, until the initiator receives a TDLS discovery response frame of the responder.

Optionally, the initiator may preferentially set the value of the BSSID field in the link identifier element to a BSSID of a BSS in which the initiator is located.

Optionally, in another implementation, the initiator may send a query frame to an AP, to query a BSSID of a BSS in which the responder is located. The query frame needs to carry an identifier of the responder, and may be a MAC address (or an MLD MAC address), an IP address, or the like of the responder. After receiving the query frame, the AP may send a response frame to the initiator. The response frame carries the BSSID of the BSS in which the responder is located.

In an implementation process of step S302, when the responder receives the TDLS discovery request frame, if the responder finds that the value of the BSSID field in the link identifier element in the TDLS discovery request frame is the same as the value of the transmitted BSSID in the multiple BSSID set in which the BSS of the responder is located, the responder sends the TDLS discovery response frame to the initiator.

Optionally, the TDLS discovery response frame carries the link identifier element, and the value of the BSSID field in the TDLS discovery response frame is set to the value of the transmitted BSSID.

Optionally, the TDLS discovery response frame is a public action frame, and a value of an address 3 (address 3, A3) field (or referred to as a BSSID field) of the TDLS discovery response frame is set to the value of the transmitted BSSID, or is set to a wildcard (wildcard) BSSID. The wildcard BSSID may be an implementation in which a value is "all ones", and indicates that all STAs need to receive the TDLS discovery response frame.

Optionally, when the responder receives the TDLS discovery request frame, if the responder finds that the value of the BSSID field in the link identifier element in the TDLS discovery request frame is the same as a value of any BSSID in the multiple BS SID set in which the BSS of the responder is located, the responder sends the TDLS discovery response frame to the initiator.

Optionally, the TDLS discovery response frame carries the link identifier element, and the value of the BSSID field in the TDLS discovery response frame is set to the value of the BSSID field in the link identifier element in the TDLS discovery request frame.

Optionally, the value of the A3 field in the TDLS discovery response frame is also set to the value of the BSSID field in the link identifier element in the TDLS discovery request frame.

Implementation 2: The first radio frame and the second radio frame are respectively a TDLS setup request frame and a TDLS setup response frame in a TDLS setup (setup) process. In this case, an exchange process of the first radio frame and the second radio frame in step S 101 and step S 102 may be implemented by using an exchange process of the TDLS setup request frame (that is, the TDLS setup request frame) and the TDLS setup response frame (that is, the TDLS setup response frame) in step S303 and step S304 shown in FIG. 7b.

In an implementation process of step S303, when the initiator sends the TDLS setup request frame, the initiator needs to set the BSSID field in the link identifier element in the TDLS setup request frame to the value of the BSSID field in the link identifier element in the previously received TDLS discovery response frame.

In an implementation process of step S304, when the responder receives the TDLS setup request frame, if the responder finds that the value of the BSSID field in the link identifier element in the TDLS setup request frame is the same as the value of the transmitted BSSID in the multiple BSSID set in which the BSS of the responder is located, the responder sends the TDLS setup response frame to the initiator. Further, the TDLS setup response frame carries the link identifier element, and the value of the BSSID field in the TDLS setup response frame is set to the value of the transmitted BSSID.

Optionally, when the responder receives the TDLS setup request frame, if the responder finds that the value of the BSSID field in the link identifier element in the TDLS setup request frame is the same as a value of any BSSID in the multiple BSSID set in which the BSS of the responder is located, the responder sends the TDLS setup response frame to the initiator. Further, the TDLS setup response frame carries the link identifier element, and the value of the BSSID field in the TDLS setup response frame is set to the value of the BSSID field in the link identifier element in the TDLS setup request frame.

Implementation 3: The first radio frame and the second radio frame are respectively a TDLS setup confirm frame and a first acknowledgment frame corresponding to the TDLS setup confirm frame in a TDLS setup (setup) process. In this case, an exchange process of the first radio frame and the second radio frame in step S101 and step S102 may be implemented by using an exchange process of the TDLS setup confirm frame (that is, the TDLS setup confirm frame) and the first acknowledgment frame in step S305 and step S306 shown in FIG. 7b.

In an implementation process in step S305, when the initiator sends the TDLS setup confirm frame, the initiator needs to set the BSSID field in the link identifier element in the TDLS setup confirm frame to a value of a BSSID field in a link identifier element in the previously received TDLS setup response frame (or TDLS setup request frame).

In an implementation process of step S306, after receiving the TDLS setup confirm frame, the responder may send a first response frame corresponding to the TDLS setup confirm frame. The first response frame may be an ACK frame.

Implementation 4: The first radio frame and the second radio frame are respectively a TDLS data frame and a second acknowledgment frame corresponding to the TDLS data frame after a TDLS setup (setup) process. In this case, an exchange process of the first radio frame and the second radio frame in step S 101 and step S 102 may be implemented by using an exchange process of the TDLS data frame (that is, the TDLS setup confirm frame) and the second acknowledgment frame in step S307 and step S308 shown in FIG. 7b.

In an implementation process in step S307, after the TDLS direct link is set up, the initiator and the responder may perform data transmission. When sending a data frame, the initiator may set an A3 field of the data frame to the value of the BSSID field in the link identifier element.

In an implementation process in step S308, if the responder receives the data frame and finds that the value of the A3 field of the data frame is the value of the BSSID field in the link identifier element in the TDLS setup request frame (or the TDLS setup response frame, or the TDLS setup confirm frame) in the TDLS setup process, the responder continues to receive the data frame. In addition, the responder may further send a second response frame, and the second response frame is an ACK frame or a BA frame.

In a possible implementation, in an implementation process of Implementation 2 or Implementation 3, any radio frame in the TDLS setup request frame transmitted in step S303, the TDLS setup response frame transmitted in step S304, and the TDLS setup confirm frame transmitted in step S305 may further carry a TPK handshake message. The TPK handshake message carries a parameter required for generating a TPK, and the parameter includes at least one of a first BSSID, a second BSSID, and a transmitted BSSID.

Optionally, the TPK satisfies the following formula:

$$TPK = KDF\text{-}Hash\text{-}Length(A)$$

A parameter A satisfies the following formula:

$$(TPK\text{-Key-Input,"TDLS PMK"}, min(\text{MAC\_I,MAC\_R})\|\max(\text{MAC\_I,MAC\_R})\|BSSID)$$

Alternatively, a parameter A satisfies the following formula:

$$(TPK\text{-}Key\text{-}Input, \textit{"TDLS PMK"},$$

$$\min(MAC\_I,MAC\_R)\|\max(MAC\_I,MAC\_R)\|\text{BSSID}\|\text{Transmitted BSSID})$$

Herein, TPK-Key-Input=Hash(min (SNonce, ANonce)||max(SNonce, ANonce)).

In addition, a related parameter satisfies the following content:

"ANonce" is an authenticator nonce and " SNonce " is a supplicant nonce, and "ANonce" and "SNonce" each are included in an FTE information element; "MAC_I" represents MAC address information of the first STA; "MAC_R" represents MAC address information of the second STA; and "BSSID" represents the first BSSID, and "Transmitted BSSID" represents a transmitted BSSID in a multiple BSSID set in which the first STA is located.

*"KDF-Hash-Length"* indicates a key generation function. For details, refer to the standard document 802.11-2020.

" min(MAC_I, MAC_R)" indicates to obtain a minimum value in MAC_I and MAC R.

" max(MAC_I, MAC_R)" indicates to obtain a maximum value in MAC_I and MAC_R.

"min(SNonce, ANonce)" indicates to obtain a minimum value in SNonce and ANonce.

" max(SNonce, ANonce) " indicates to obtain a minimum value in SNonce and ANonce.

"Hash(min (SNonce, ANonce)||max(SNonce, ANonce))" indicates a hash algorithm in an authentication and key management suite.

"TDLS PMK" indicates that a KDF operation is to generate a TDLS PMK.

"||" represents "or".

It can be learned from the foregoing descriptions that, when the TPK is generated, the used BSSID is a value of the BSSID field in the link identifier element in the TDLS setup request/response/confirm frame in the TDLS setup process in Implementation 2 or Implementation 3. The BSSID may be the value of the transmitted BSSID in the multiple BSSID set including the BSS in which the initiator (or the responder) is located, or may be a value of a BSSID of a BSS in which the initiator (or the responder) is located.

Optionally, in step S307 and step S308, after the TDLS direct link is set up, the initiator and the responder may perform data transmission. When sending a data frame, the initiator or the responder may set an A1 field of the data frame to an MLD MAC address of the peer party, and set an A2 field to an MLD MAC address of the initiator or the responder.

Optionally, if the responder receives the data frame and finds that a value of the A1 field of the data frame is a value of an MLD MAC address of the responder, the responder continues to receive the data frame.

In this embodiment, in a transmission process applied to the TDLS, the first radio frame sent by the first STA includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the second STA receives the first radio frame, the second STA sends a response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

The foregoing describes this application from a perspective of the method. The following further describes this application from a perspective of an apparatus.

FIG. 8 shows a communication apparatus 800 according to this application. For example, the communication apparatus 800 may be specifically a TDLS-based transmission apparatus.

As shown in FIG. 8, the communication apparatus 800 includes a sending unit 801 and a receiving unit 802.

Specifically, when the communication apparatus 800 is configured to perform a method performed by a TDLS initiator in the TDLS-based transmission method, the sending unit 801 and the receiving unit 802 are configured to execute the following process.

The sending unit 801 is configured to send a first radio frame. The first radio frame includes initiator address information, responder address information, and a first BSSID, and the first BSSID is a BSSID in a multiple BSSID set including a BSSID of a BSS in which a first STA is located.

The receiving unit 802 is configured to receive a second radio frame. The second radio frame is a response frame of the first radio frame.

Based on the technical solution, in a transmission process applied to the TDLS, the first radio frame sent by the sending unit 801 includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the second STA receives the first radio frame, the second STA sends a response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

In a possible implementation, an initiator is the first STA, and a responder is the second STA; or the initiator is a first multi-link device MLD in which the first STA is located, and the responder is the second STA; or the initiator is the first STA, and the responder is a second MLD in which the second STA is located; or the initiator is a first MLD in which the first STA is located, and the responder is a second MLD in which the second STA is located.

In a possible implementation, the BSSID of the BSS in which the first STA is located is different from the BSSID of the BSS in which the second STA is located.

In a possible implementation, the BSSID of the BSS in which the first STA is located is the same as the BSSID of the BSS in which the second STA is located.

In a possible implementation,

the first BSSID is a transmitted BSSID in the multiple BSSID set; or
the first BSSID is a BSSID corresponding to the BSS in which the first STA is located; or
the first BSSID is a BSSID corresponding to the BSS in which the second STA is located.

Optionally, the first BSSID is any BSSID in the multiple BSSID set.

In a possible implementation, the second radio frame includes the initiator address information, the responder address information, and a second BSSID, and the multiple BSSID set includes the second BSSID.

In a possible implementation, the second BSSID is a transmitted basic service set identifier transmitted BSSID

in the multiple BSSID set; or

> the second BSSID is a BSSID corresponding to the BSS in which the first STA is located; or
> the second BSSID is a BSSID corresponding to the BSS in which the second STA is located.

Optionally, the second BSSID is any BSSID in the multiple BSSID set.

In a possible implementation, the first BSSID is the same as the second BSSID.

In a possible implementation, the first BSSID is different from the second BSSID.

In a possible implementation, the BSSID of the BSS in which the first STA is located is different from the BSSID of the BSS in which the second STA is located.

In a possible implementation,

> the first radio frame is a TDLS discovery request frame, and the second radio frame is a TDLS discovery response frame; or
> the first radio frame is a TDLS setup request frame, and the second radio frame is a TDLS setup response frame; or
> the first radio frame is a TDLS setup confirm frame, and the second radio frame is a first acknowledgment frame; or
> the first radio frame is a TDLS data frame, and the second radio frame is a second acknowledgment frame.

Optionally, the first acknowledgment frame may be an acknowledgment (acknowledge, ACK) frame, or the second acknowledgment frame may be a block acknowledgment (block acknowledge, Block ACK, BA for short) frame or an ACK frame.

In a possible implementation, the first radio frame includes a link identification information (Link Identifier element, LIE) element, the link identification information element includes the initiator address information, the responder address information, and the first BSSID, and the initiator address information is MAC address information of the first STA.

Optionally, the first STA is a single-link device.

In a possible implementation, the first radio frame includes a link identification information element and a multi-link element; the link identification information element includes the initiator address information, the responder address information, and the first BSSID, and the initiator address information is the MAC address information of the first MLD in which the first STA is located; and the multi-link element includes the MAC address information of the first STA.

Optionally, the first STA is a STA in the multi-link device.

In a possible implementation, the multi-link element includes a common information field, and the MAC address information of the first STA is located in the common information field.

In a possible implementation, the first radio frame includes a multi-link element, the multi-link element includes a first field, and the first field indicates whether the multi-link element includes the MAC address information of the first STA.

Optionally, when a value of the first field is a first value, the first field indicates that the multi-link element in the first radio frame includes the MAC address information of the first STA.

Optionally, when the value of the first field is a second value, the first field indicates that the multi-link element in the first radio frame does not include the MAC address information of the first STA.

Optionally, the first value is different from the second value.

In a possible implementation, the first field is located in a presence bitmap field in the multi-link element.

In a possible implementation, the second radio frame includes a link identification information element, and the link identification information element includes the initiator address information, the responder address information, and the second BSSID.

Optionally, the responder address information is MAC address information of MAC of the second STA.

Optionally, the second STA is a single-link device.

In a possible implementation, the second radio frame includes a link identification information element and a multi-link element; the link identification information element includes the initiator address information, the responder address information, and the second BSSID, and the responder address information is MAC address information of the second MLD in which the second STA is located; and the multi-link element includes MAC address information of the second STA.

Optionally, the second STA is a STA in the multi-link device.

In a possible implementation, the multi-link element includes a common information field, and the MAC address information of the second STA is located in the common information field.

In a possible implementation, the second radio frame includes a multi-link element, the multi-link element includes a second field, and the second field indicates whether the multi-link element includes the MAC address information of the second STA.

Optionally, when a value of the first field is a first value, the first field indicates that the multi-link element in the second radio frame includes the MAC address information of the second STA.

Optionally, when the value of the first field is a second value, the first field indicates that the multi-link element in the second radio frame does not include the MAC address information of the second STA.

Optionally, the first value is different from the second value.

In a possible implementation, the second field is located in a presence bitmap field in the multi-link element.

In a possible implementation, the first radio frame includes a TDLS discovery request frame, a TDLS setup request frame, or a TDLS setup confirm frame; and that the sending unit 801 sends the first radio frame includes: The sending unit 801 sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

In a possible implementation, the first radio frame is a TDLS data frame; and that the sending unit 801 sends the first radio frame includes: The sending unit 801 sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

In a possible implementation, the second radio frame is a TDLS setup response frame; and that the receiving unit 802 receives the second radio frame includes: The receiving unit 802 receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

In a possible implementation, the second radio frame includes a TDLS discovery response frame, a response frame of the TDLS setup confirm frame, or a response frame of the TDLS data frame; and that the receiving unit 802 receives the second radio frame includes: The receiving unit 802 receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

In a possible implementation, the first radio frame further includes a TPK handshake message, the TPK handshake message carries a parameter required for generating a TPK, and the parameter includes the first BSSID.

In a possible implementation, the first STA and the second STA are respectively affiliated with different multilink devices MLDs.

In a possible implementation, the responder address information includes the MAC address information of the second STA.

The sending unit 801 is further configured to send a third radio frame. The third radio frame includes IP address information of the second STA, and a query frame is used to request the MAC address information of the second STA.

The receiving unit 802 is further configured to receive a response frame of the third radio frame. The response frame of the third radio frame includes the MAC address information of the second STA.

In a possible implementation, the first BSSID is a BSSID corresponding to the BSS in which the second STA is located.

The sending unit 801 is further configured to send a fourth radio frame. The fourth radio frame includes address information of the second STA, and the query frame is used to request the BSSID corresponding to the BSS in which the second STA is located.

The receiving unit 802 is further configured to receive a response frame of the fourth radio frame. The response frame of the fourth radio frame includes the BSSID corresponding to the BSS in which the second STA is located.

As shown in FIG. 8, the communication apparatus 800 includes a sending unit 801 and a receiving unit 802.

Specifically, when the communication apparatus 800 is configured to perform a method performed by a TDLS responder in the TDLS-based transmission method, the sending unit 801 and the receiving unit 802 are configured to execute the following process.

The receiving unit 802 is configured to receive a first radio frame. The first radio frame includes initiator address information, responder address information, and a first BSSID, and the first BSSID is a BSSID in a multiple BSSID set including a BSSID of a BSS in which a first STA is located.

The sending unit 801 is configured to send a second radio frame. The second radio frame is a response frame of the first radio frame.

Based on the technical solution, in a transmission process applied to the TDLS, the first radio frame received by the receiving unit 802 includes the initiator address information, the responder address information, and the first BSSID. The first STA may be a TDLS initiator (TDLS initiator), a second STA may be a TDLS responder (TDLS responder), and the first BSSID is a BSSID in the multiple BSSID set including the BSSID of the BSS in which the first STA is located. Therefore, when the BSS in which the first STA is located and a BSS in which the second STA is located belong to a same multiple BSSID set, after the receiving unit receives the first radio frame, the sending unit sends the response frame of the first radio frame, that is, the second radio frame, based on the first radio frame. Therefore, when BSSs in which different STAs are located belong to a same multiple BSSID set, the different STAs implement TDLS-based transmission by using a radio frame to carry a BSSID in the multiple BSSID set, so that different STAs associated with a same multiple BSSID set perform communication based on the TDLS, to implement point-to-point communication, improve a transmission rate, and reduce a latency.

In a possible implementation, an initiator is the first STA, and a responder is the second STA; or the initiator is a first multi-link device MLD in which the first STA is located, and the responder is the second STA; or the initiator is the first STA, and the responder is a second MLD in which the second STA is located; or the initiator is a first MLD in which the first STA is located, and the responder is a second MLD in which the second STA is located.

In a possible implementation, the BSSID of the BSS in which the first STA is located is different from the BSSID of the BSS in which the second STA is located.

In a possible implementation, the BSSID of the BSS in which the first STA is located is the same as the BSSID of the BSS in which the second STA is located.

In a possible implementation,

the first BSSID is a transmitted BSSID in the multiple BSSID set; or
the first BSSID is a BSSID corresponding to the BSS in which the first STA is located; or
the first BSSID is a BSSID corresponding to the BSS in which the second STA is located.

Optionally, the first BSSID is any BSSID in the multiple BSSID set.

In a possible implementation, the second radio frame includes the initiator address information, the responder address information, and a second BSSID, and the multiple BSSID set includes the second BSSID.

In a possible implementation, the second BSSID is a transmitted basic service set identifier transmitted BSSID in the multiple BSSID set; or

the second BSSID is a BSSID corresponding to the BSS in which the first STA is located; or
the second BSSID is a BSSID corresponding to the BSS in which the second STA is located.

Optionally, the second BSSID is any BSSID in the multiple BSSID set.

In a possible implementation, the first BSSID is the same as the second BSSID.

In a possible implementation, the first BSSID is different from the second BSSID.

In a possible implementation, the BSSID of the BSS in which the first STA is located is different from the BSSID of the BSS in which the second STA is located.

In a possible implementation,

the first radio frame is a TDLS discovery request frame, and the second radio frame is a TDLS discovery response frame; or
the first radio frame is a TDLS setup request frame, and the second radio frame is a TDLS setup response frame; or
the first radio frame is a TDLS setup confirm frame, and the second radio frame is a first acknowledgment frame; or
the first radio frame is a TDLS data frame, and the second radio frame is a second acknowledgment frame.

Optionally, the first acknowledgment frame may be an acknowledgment (acknowledge, ACK) frame, or the second acknowledgment frame may be a block acknowledgment (block acknowledge, Block ACK, BA for short) frame or an ACK frame.

In a possible implementation, the first radio frame includes a link identification information (Link Identifier element, LIE) element, the link identification information element includes the initiator address information, the responder address information, and the first BSSID, and the initiator address information is MAC address information of the first STA.

Optionally, the first STA is a single-link device.

In a possible implementation, the first radio frame includes a link identification information element and a multi-link element; the link identification information element includes the initiator address information, the responder address information, and the first BSSID, and the initiator address information is the MAC address information of the first MLD in which the first STA is located; and the multi-link element includes the MAC address information of the first STA.

Optionally, the first STA is a STA in the multi-link device.

In a possible implementation, the multi-link element includes a common information field, and the MAC address information of the first STA is located in the common information field.

In a possible implementation, the first radio frame includes a multi-link element, the multi-link element includes a first field, and the first field indicates whether the multi-link element includes the MAC address information of the first STA.

Optionally, when a value of the first field is a first value, the first field indicates that the multi-link element in the first radio frame includes the MAC address information of the first STA.

Optionally, when the value of the first field is a second value, the first field indicates that the multi-link element in the first radio frame does not include the MAC address information of the first STA.

Optionally, the first value is different from the second value.

In a possible implementation, the first field is located in a presence bitmap field in the multi-link element.

In a possible implementation, the second radio frame includes a link identification information element, and the link identification information element includes the initiator address information, the responder address information, and the second BSSID.

Optionally, the responder address information is MAC address information of MAC of the second STA.

Optionally, the second STA is a single-link device.

In a possible implementation, the second radio frame includes a link identification information element and a multi-link element; the link identification information element includes the initiator address information, the responder address information, and the second BSSID, and the responder address information is MAC address information of the second MLD in which the second STA is located; and the multi-link element includes MAC address information of the second STA.

Optionally, the second STA is a STA in the multi-link device.

In a possible implementation, the multi-link element includes a common information field, and the MAC address information of the second STA is located in the common information field.

In a possible implementation, the second radio frame includes a multi-link element, the multi-link element includes a second field, and the second field indicates whether the multi-link element includes the MAC address information of the second STA.

Optionally, when a value of the first field is a first value, the first field indicates that the multi-link element in the second radio frame includes the MAC address information of the second STA.

Optionally, when the value of the first field is a second value, the first field indicates that the multi-link element in the second radio frame does not include the MAC address information of the second STA.

Optionally, the first value is different from the second value.

In a possible implementation, the second field is located in a presence bitmap field in the multi-link element.

In a possible implementation, the second radio frame is a TDLS setup response frame; and that the receiving unit 802 receives the second radio frame includes: The receiving unit 802 receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

In a possible implementation, the first radio frame is a TDLS data frame; and that the receiving unit 802 receives the first radio frame includes: The receiving unit 802 receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

In a possible implementation, the second radio frame includes a TDLS discovery response frame, a response frame of the TDLS setup confirm frame, or a response frame of the TDLS data frame; and that the sending unit 801 sends the second radio frame includes: The sending unit 801 sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

In a possible implementation, the first radio frame further includes a TPK handshake message, the TPK handshake message carries a parameter required for generating a TPK, and the parameter includes the first BSSID.

In a possible implementation, the first STA and the second STA are respectively affiliated with different multi-link devices MLDs.

As shown in FIG. 8, the communication apparatus 800 includes a sending unit 801 and a receiving unit 802.

Specifically, when the communication apparatus 800 is configured to perform a method performed by an AP in the TDLS-based transmission method, the sending unit 801 and the receiving unit 802 are configured to execute the following process.

The receiving unit 802 is configured to receive a third radio frame from a first STA. The third radio frame includes IP address information of a responder, a query frame is used to request MAC address information of the responder, and a BSS in which the first STA is located is different from a BSS in which the responder is located.

The sending unit 801 is configured to send a response frame of the third radio frame. A response frame of the fourth radio frame includes MAC address information of the responder.

Based on the technical solution, the third radio frame that is received by the receiving unit 802 and that carries an IP address of the responder is used to request a MAC address of the responder, so that the sending unit 801 sends the response frame of the third radio frame based on the third radio frame, and the first STA determines the MAC address of the responder based on the response frame of the third radio frame. Then, the first STA may implement TDLS transmission with the responder based on the first radio frame that carries the MAC address of the responder, the BSS in which the first STA is located and the BSS in which the responder is located belong to a same multiple BSSID set, and the BSS in which the first STA is located is different from the BSS in which the responder is located. Therefore, STAs in different BSSs implement TDLS transmission by using a radio frame to carry a MAC address indicated by the AP, so that different STAs associated with a same multiple BSSID set communicate with each other based on a TDLS, to implement point-to-point communication, improve a transmission rate, and reduce a latency.

In a possible implementation,

the responder is a second STA or a second MLD in which the second STA is located.

In a possible implementation,

the first STA and the responder are located in a same local area network; or

the first STA and the responder are located in a same subnet; or

a mapping relationship between identification information of the responder and responder address information is preconfigured in the AP.

In a possible implementation,

the receiving unit 802 is further configured to receive a fourth radio frame from the first STA. The fourth radio frame includes the responder address information, and the query frame is used to request a BSSID corresponding to the BSS in which the responder is located.

The sending unit 801 is further configured to send a response frame of the fourth radio frame. The response frame of the fourth radio frame includes the BSSID corresponding to the BSS in which the responder is located.

It should be noted that the communication apparatus 800 may be further configured to perform the foregoing other embodiments and achieve corresponding beneficial effects. For details, refer to the descriptions in the foregoing embodiments. Details are not described herein again.

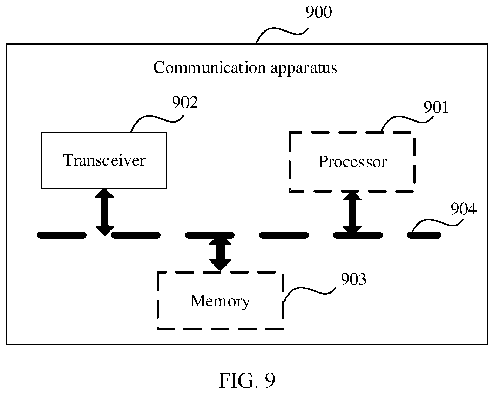

For ease of description, FIG. 9 is a schematic diagram of a structure of a communication apparatus 900 according to an embodiment of this application. The communication apparatus 900 may be an AP (for example, the AP in the method embodiments), a STA (for example, the TDLS initiator or the TDLS responder in the method embodiments), or a chip in the AP or the STA. FIG. 9 shows only main components of the communication apparatus 900. The communication apparatus 900 includes at least a transceiver 902.

Optionally, the transceiver 902 may also be referred to as an input/output port, a communication port, a communication interface, or the like.

Optionally, the communication apparatus 900 further includes a processor 901. In addition, the communication apparatus 900 may further include a memory 903.

Optionally, a bus 904 may be further added to the apparatus 900. The bus 904 is configured to establish a connection between the transceiver 902 and/or the memory 903 and the processor 901.

The processor 901 is mainly configured to: process a communication protocol and communication data, control an entire communication apparatus, execute a software program, and process data of the software program. The memory 903 is mainly configured to store the software program and data. The transceiver 902 may include a control circuit and an antenna. The control circuit is mainly configured to: perform a conversion between a baseband signal and a radio frequency signal, and process the radio frequency signal. The antenna is mainly configured to receive and send a radio frequency signal in a form of an electromagnetic wave. For example, the transceiver 902 may be a touchscreen, a display, a keyboard, or the like, and is mainly configured to: receive data entered by a user, and output data to the user.

After the communication apparatus 900 is powered on, the processor 901 may read the software program in the memory 903, interpret and execute instructions of the software program, and process data of the software program. When data needs to be transmitted in a wireless manner, the processor 901 performs baseband processing on the to-be-transmitted data, and then outputs a baseband signal to a radio frequency circuit, and the radio frequency circuit performs radio frequency processing on the baseband signal, and then transmits a radio frequency signal to an outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 901. The processor 901 converts the baseband signal into data, and processes the data.

Optionally, the memory 903 may be located inside the processor 901.

In any one of the foregoing designs, the processor 901 may include a communication interface for implementing receiving and sending functions. For example, the communication interface may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 901 may store instructions. The instructions may be a computer program. The computer program is run on the processor 901, so that the communication apparatus 900 can perform the method described in the method embodiments. The computer program may be fixed in the processor 901. In this case, the processor 901 may be implemented by hardware.

In an implementation, the communication apparatus 900 may include a circuit, and the circuit may implement a sending, receiving, or communication function in any one of the method embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured by using various IC technologies, for example, a complementary metal oxide semiconductor (complementary metal oxide semiconductor, CMOS), an N-type metal oxide semiconductor (N-type metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by that in FIG. 9. The communication apparatus may be an independent device or may be part of a large device. For example, the communication apparatus may be:

(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

In a possible product form, the AP and the STA in the embodiments of this application may be implemented by using a general purpose processor.

It should be understood that the communication apparatuses in the foregoing various product forms have any function of the AP or STA in any one of the foregoing embodiments. Details are not described herein again.

An embodiment of this application further provides a computer-readable storage medium. The computer-readable storage medium stores computer program code. When a processor executes the computer program code, an electronic device performs the method in any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the receive circuit, so that the apparatus performs the method in any one of the foregoing embodiments.

An embodiment of this application further provides a wireless communication system, including at least two STAs (and a possible AP). The at least two STAs (and the possible AP) may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in an ASIC.

A person of skill in the art should be aware that in one or more of the foregoing examples, the functions described in this application may be implemented by using hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a common or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A transmission method applied to a tunneled direct link setup TDLS, comprising:

   sending a first radio frame, wherein the first radio frame comprises initiator address information, responder address information, and a first basic service set identifier BSSID, and the first BSSID is a BSSID in a multiple BSSID set comprising a BSSID of a basic service set BSS in which a first station STA is located; and
   receiving a second radio frame, wherein the second radio frame is a response frame of the first radio frame.

2. A transmission method applied to a tunneled direct link setup TDLS, comprising:

   receiving a first radio frame, wherein the first radio frame comprises initiator address information, responder address information, and a first basic service set identifier BSSID, and the first BSSID is a BSSID in a multiple BSSID set comprising a BSSID of a basic service set BSS in which a second station STA is located; and
   sending a second radio frame, wherein the second radio frame is a response frame of the first radio frame.

3. The method according to claim 1 or 2, wherein

   an initiator is the first STA, and a responder is the second STA; or
   the initiator is a first multi-link device MLD in which the first STA is located, and the responder is the second STA; or
   the initiator is the first STA, and the responder is a second MLD in which the second STA is located; or
   the initiator is a first MLD in which the first STA is located, and the responder is a second MLD in which the second STA is located.

4. The method according to claim 3, wherein
   the BSSID of the BSS in which the first STA is located is different from the BSSID of the BSS in which the second STA is located.

5. The method according to claim 3 or 4, wherein

   the first BSSID is a transmitted BSSID in the multiple BSSID set; or
   the first BSSID is a BSSID corresponding to the BSS in which the first STA is located; or
   the first BSSID is a BSSID corresponding to the BSS in which the second STA is located.

6. The method according to any one of claims 3 to 5, wherein
   the second radio frame comprises the initiator address information, the responder address information, and a second BSSID, and the multiple BSSID set comprises the second BSSID.

7. The method according to claim 6, wherein

   the second BSSID is a transmitted basic service set identifier transmitted BSSID in the multiple BSSID set; or
   the second BSSID is a BSSID corresponding to the BSS in which the first STA is located; or
   the second BSSID is a BSSID corresponding to the BSS in which the second STA is located.

8. The method according to claim 6 or 7, wherein the first BSSID is the same as the second BSSID.

9. The method according to any one of claims 1 to 8, wherein

the first radio frame is a TDLS discovery request frame, and the second radio frame is a TDLS discovery response frame; or

the first radio frame is a TDLS setup request frame, and the second radio frame is a TDLS setup response frame; or

the first radio frame is a TDLS setup confirm frame, and the second radio frame is a first acknowledgment frame; or

the first radio frame is a TDLS data frame, and the second radio frame is a second acknowledgment frame.

10. The method according to any one of claims 3 to 9, wherein the first radio frame comprises a link identification information element, and the link identification information element comprises the initiator address information, the responder address information, and the first BSSID; and
the initiator address information is MAC address information of the first STA.

11. The method according to any one of claims 3 to 9, wherein the first radio frame comprises a link identification information element and a multi-link element;

the link identification information element comprises the initiator address information, the responder address information, and the first BSSID, and the initiator address information is MAC address information of the first MLD in which the first STA is located; and
the multi-link element comprises MAC address information of the first STA.

12. The method according to claim 11, wherein the multi-link element comprises a common information field, and the MAC address information of the first STA is located in the common information field.

13. The method according to any one of claims 3 to 12, wherein the first radio frame comprises the multi-link element, the multi-link element comprises a first field, and the first field indicates whether the multi-link element comprises the MAC address information of the first STA.

14. The method according to claim 13, wherein the first field is located in a presence bitmap field in the multi-link element.

15. The method according to any one of claims 6 to 14, wherein the second radio frame comprises a link identification information element, and the link identification information element comprises the initiator address information, the responder address information, and the second BSSID; and
the responder address information is MAC address information of the second STA.

16. The method according to any one of claims 6 to 14, wherein the second radio frame comprises a link identification information element and a multi-link element;

the link identification information element comprises the initiator address information, the responder address information, and the second BSSID, and the responder address information is MAC address information of the second MLD in which the second STA is located; and
the multi-link element comprises MAC address information of the second STA.

17. The method according to claim 16, wherein the multi-link element comprises a common information field, and the MAC address information of the second STA is located in the common information field.

18. The method according to any one of claims 3 to 17, wherein the second radio frame comprises the multi-link element, the multi-link element comprises a second field, and the second field indicates whether the multi-link element comprises the MAC address information of the second STA.

19. The method according to claim 18, wherein the second field is located in a presence bitmap field in the multi-link element.

20. The method according to any one of claims 1 to 19, wherein the first radio frame further comprises a tunneled direct link setup peer key handshake message TPK handshake message, the TPK handshake message carries a parameter required for generating a tunneled direct link setup peer key TPK, and the parameter comprises the first BSSID.

21. The method according to any one of claims 3 to 20, wherein before the sending a first radio frame, the method further comprises:

sending a third radio frame, wherein the third radio frame comprises internet protocol IP address information of the responder, and the query frame is used to request MAC address information of the responder; and receiving a response frame of the third radio frame, wherein the response frame of the third radio frame comprises the MAC address information of the responder.

22. The method according to any one of claims 3 to 21, wherein the first BSSID is a BSSID corresponding to the BSS in which the second STA is located, and before the sending a first radio frame, the method further comprises:

sending a fourth radio frame, wherein the fourth radio frame comprises the responder address information, and the query frame is used to request a BSSID corresponding to a BSS in which the responder is located; and receiving a response frame of the fourth radio frame, wherein the response frame of the fourth radio frame comprises the BSSID corresponding to the BSS in which the responder is located.

23. A transmission apparatus applied to a tunneled direct link setup TDLS, wherein the apparatus comprises a receiving unit and a sending unit, and the apparatus is configured to perform the method according to any one of claims 1 and 3 to 22.

24. A transmission apparatus applied to a tunneled direct link setup TDLS, wherein the apparatus comprises a receiving unit and a sending unit, and the apparatus is configured to perform the method according to any one of claims 2 to 22.

25. A communication apparatus, comprising at least one processor, coupled to a memory, wherein

the memory is configured to store a program or instructions; and
the at least one processor is configured to execute the program or the instructions, so that the apparatus implements the method according to any one of claims 1 and 3 to 22.

26. A communication apparatus, comprising at least one processor, coupled to a memory, wherein

the memory is configured to store a program or instructions; and
the at least one processor is configured to execute the program or the instructions, so that the apparatus implements the method according to any one of claims 2 to 22.

27. A computer program product comprising program instructions, wherein when the program instructions are run on a computer, the computer is enabled to perform the method according to any one of claims 1 to 22.

28. A computer-readable storage medium, wherein the computer-readable storage medium stores program instructions, and when the program instructions are run, the method according to any one of claims 1 to 22 is performed.

**Multi-link access point device**

Link 1      Link 2      Link n

AP 1      AP 2   ...   AP n

Associated      Associated      Associated

STA 1      STA 2   ...   STA n

Link 1      Link 2      Link n

**Multi-link station device**

FIG. 1

| | Element identifier | Length | Basic service set identifier | TDLS initiator station address | TDLS responder station address |
|---|---|---|---|---|---|
| | Element ID | Length | BSSID | TDLS initiator STA address | TDLS responder STA address |
| Quantity of octets (Octets): | 1 | 1 | 6 | 6 | 6 |

FIG. 2a

| Frame control | Duration | Address 1 | Address 2 | Address 3 | Sequence control | Address 4 | Quality of service control | High throughput control | Frame body | Frame check sequence |
|---|---|---|---|---|---|---|---|---|---|---|
| Frame control | Duration | Address 1 | Address 2 | Address 3 | Sequence control | Address 4 | QoS control | HT control | Frame body | FCS |

FIG. 2b

| Element identifier | Length | Version | Group data cipher suite | Pairwise cipher suite count | Pairwise cipher suite list |
|---|---|---|---|---|---|
| Element ID | Length | Vision | Group data cipher suite | Pairwise cipher suite count | Pairwise cipher suite list |

Quantity of octets:
(Octets)

| 1 | 1 | 2 | 0 or 4 | 0 or 2 | 0 or (4 * m) |
|---|---|---|---|---|---|

| Authentication and key management suite count | Authentication and key management suite list | Robust security network element capability information | Pairwise master key identifier count | Pairwise master key identifier list | Group management cipher suite |
|---|---|---|---|---|---|
| AKM suite count | AKM suite list | RSN capabilities | PMKID count | PMKID list | Group management cipher suite |

Quantity of octets:
(Octets)

| 0 or 2 | 0 or (4 * n) | 0 or 2 | 0 or 2 | 0 or (16 * s) | 0 or 4 |
|---|---|---|---|---|---|

FIG. 3

| Element identifier | Length | Message integrity code control | Message integrity code | Authenticator nonce | Supplicant nonce | Optional parameter |
|---|---|---|---|---|---|---|
| Element ID | Length | MIC control | MIC | ANonce | SNonce | Optional parameter(s) |

Quantity of octets: (Octets)

| | | | | | | |
|---|---|---|---|---|---|---|
| 1 | 1 | 2 | variable | 32 | 32 | variable |

FIG. 4

FIG. 5a

Same multiple BSSID set 2

Same multiple BSSID set 1

AP MLD 1

AP 11          AP 12

AP MLD 2

AP 21          AP 22

Non-AP MLD 1

STA 11          STA 12

Non-AP MLD 2

STA 21          STA 22

FIG. 5b

| Frame control | Duration | Address 1 | Address 2 | Address 3 | Sequence control | Address 4 | Quality of service control | High throughput control | Frame body | Frame check sequence |
|---|---|---|---|---|---|---|---|---|---|---|
| Frame control | Duration | Address 1 | Address 2 | Address 3 | Sequence control | Address 4 | QoS control | HT control | Frame body | FCS |

| Category | TDLS action | Dialog token | Link identifier | Multi-link element |
|---|---|---|---|---|
| Category | TDLS action | Dialog token | Link identification information element | Multi-link element |

FIG. 5c

EP 4 387 376 A1

| Frame control | Duration | Address 1 | Address 2 | Address 3 | Sequence control | High throughput control | Frame body | Frame check sequence |
|---|---|---|---|---|---|---|---|---|
| Frame control | Duration | Address 1 | Address 2 | Address 3 | Sequence control | HT control | Frame body | FCS |

FIG. 5d

FIG. 6

FIG. 7a

Initiator                                                    Responder

S301: TDLS discovery request frame

S302: TDLS discovery response frame

S303: TDLS setup request frame

S304: TDLS setup response frame

S305: TDLS confirm frame

S306: First acknowledgment frame

S307: TDLS data frame

S308: Second acknowledgment frame

FIG. 7b

Communication apparatus 800

| Sending unit 801 | Receiving unit 802 |

FIG. 8

900

Communication apparatus

902

Transceiver

901

Processor

904

903

Memory

FIG. 9

## INTERNATIONAL SEARCH REPORT

| International application No. |
|---|
| **PCT/CN2022/111737** |

**A. CLASSIFICATION OF SUBJECT MATTER**

H04W 76/11(2018.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; IEEE; 3GPP: 通道, 链路, 直接, 点对点, 基本服务集, 标识, 请求, 建立, 发起, 站点, 反馈, 响应, 回馈, 应答, 地址, tunneled direct link, DLS, channel, basic service set identifier, BSSID, point to point, P2P, WLAN, STA, MAC, address, IP, request, initiator, response, answer, feedback, station

**C. DOCUMENTS CONSIDERED TO BE RELEVANT**

| Category* | Citation of document, with indication, where appropriate, of the relevant passages | Relevant to claim No. |
|---|---|---|
| X | CN 101803294 A (LG ELECTRONICS INC.) 11 August 2010 (2010-08-11) description, paragraphs [0038]-[0088], and figures 1-12 | 1-28 |
| X | CN 102595396 A (CHONGQING UNIVERSITY OF POSTS AND TELECOMMUNICATIONS) 18 July 2012 (2012-07-18) description, paragraphs [0015]-[0026], and figures 1-5 | 1-28 |
| A | CN 112839332 A (HUAWEI TECHNOLOGIES CO., LTD.) 25 May 2021 (2021-05-25) entire document | 1-28 |
| A | CN 101572935 A (SONY CORP.) 04 November 2009 (2009-11-04) entire document | 1-28 |
| A | CN 104053213 A (ZTE CORP.) 17 September 2014 (2014-09-17) entire document | 1-28 |
| A | US 2010014458 A1 (SAMSUNG ELECTRONICS CO., LTD.) 21 January 2010 (2010-01-21) entire document | 1-28 |
| A | US 2008075038 A1 (SAMSUNG ELECTRONICS CO., LTD.) 27 March 2008 (2008-03-27) entire document | 1-28 |

☐ Further documents are listed in the continuation of Box C. ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 September 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

International application No.

**PCT/CN2022/111737**

| Patent document cited in search report | | | Publication date (day/month/year) | Patent family member(s) | | | Publication date (day/month/year) |
|---|---|---|---|---|---|---|---|
| CN | 101803294 | A | 11 August 2010 | KR | 20100071994 | A | 29 June 2010 |
| | | | | EP | 2195971 | A1 | 16 June 2010 |
| | | | | JP | 2010539844 | A | 16 December 2010 |
| | | | | US | 2012230316 | A1 | 13 September 2012 |
| | | | | US | 2013142189 | A1 | 06 June 2013 |
| | | | | US | 2009073945 | A1 | 19 March 2009 |
| | | | | TW | 200926684 | A | 16 June 2009 |
| | | | | WO | 2009038348 | A1 | 26 March 2009 |
| | | | | KR | 20110003370 | A | 11 January 2011 |
| | | | | KR | 101146893 | B1 | 17 May 2012 |
| | | | | US | 8208451 | B2 | 26 June 2012 |
| | | | | CN | 101803294 | B | 29 August 2012 |
| | | | | JP | 5042367 | B2 | 03 October 2012 |
| | | | | KR | 101220774 | B1 | 09 January 2013 |
| | | | | TW | 1444009 | B | 01 July 2014 |
| | | | | EP | 2195971 | A4 | 10 June 2015 |
| | | | | EP | 2195971 | B1 | 07 November 2018 |
| CN | 102595396 | A | 18 July 2012 | CN | 102595396 | B | 15 July 2015 |
| CN | 112839332 | A | 25 May 2021 | WO | 2021098415 | A1 | 27 May 2021 |
| CN | 101572935 | A | 04 November 2009 | US | 2009268653 | A1 | 29 October 2009 |
| | | | | JP | 2009267936 | A | 12 November 2009 |
| | | | | JP | 4518183 | B2 | 04 August 2010 |
| | | | | US | 8427990 | B2 | 23 April 2013 |
| CN | 104053213 | A | 17 September 2014 | US | 2014254471 | A1 | 11 September 2014 |
| | | | | US | 9961719 | B2 | 01 May 2018 |
| | | | | CN | 104053213 | B | 17 April 2018 |
| US | 2010014458 | A1 | 21 January 2010 | US | 8255714 | B2 | 28 August 2012 |
| US | 2008075038 | A1 | 27 March 2008 | KR | 100772417 | B1 | 01 November 2007 |
| | | | | US | 9521556 | B2 | 13 December 2016 |

Form PCT/ISA/210 (patent family annex) (January 2015)

**REFERENCES CITED IN THE DESCRIPTION**

**Patent documents cited in the description**

- CN 202111044588